(19) Europäisches Patentamt
European Patent Office
Office européen des brevets

(11) Publication number: **0 319 624 A1**

(12) **EUROPEAN PATENT APPLICATION**

(21) Application number: **87310895.5**

(51) Int. Cl.⁴: **C07F 11/00 , C07F 15/06**

(22) Date of filing: **10.12.87**

(43) Date of publication of application: **14.06.89 Bulletin 89/24**

(84) Designated Contracting States: **DE FR GB IT NL**

(71) Applicant: **Exxon Research and Engineering Company**
**P.O.Box 390 180 Park Avenue**
**Florham Park New Jersey 07932(US)**

(72) Inventor: **Halbert, Thomas Risher**
**RD1, Box 361 Whispering Way**
**Annandale New Jersey(US)**
Inventor: **Stiefel, Edward Ira**
**3 Glen Eagles Drive**
**Bridgewater New Jersey(US)**
Inventor: **Cohen, Steven Alan**
**962 East Prairie Avenue**
**Naperville Illinois(US)**

(74) Representative: **Somers, Harold Arnold et al**
**ESSO Engineering (Europe) Ltd. Patents & Licences Apex Tower High Street**
**New Malden Surrey KT3 4DJ(GB)**

(54) **Heterometallic thiocubanes and method of making them.**

(57) This invention relates to heterometallic thiocubane compositions containing the $M^1_2 M^2_2 S_4$ cluster core and methods of making them wherein $M^1$ is Re, V, Mo or W and $M^2$ is Co, Cr, Cu, Ni or Fe but preferably Co. More particularly, the invention relates to compositions of the formula $M^2_2 M^2_2 S_4 L^1_2 L^2_2 L^3_2$ wherein $M^1$ and $M^2$ are as above, $L^1$ is a bidentate sulfur or nitrogen bearing ligand (most preferably a dialkyldithiocarbamate), $L^2$ is optional but may be an O, N, P or S-containing monodentate donor ligand, and $L^3$ may be CO, a monodentate anion ligand such as a halide (preferably Cl), mercaptide or alkoxide, or another O, N, P, or S containing monodentate donor ligand. The compositions are suitable for making active hydrotreating catalysts.

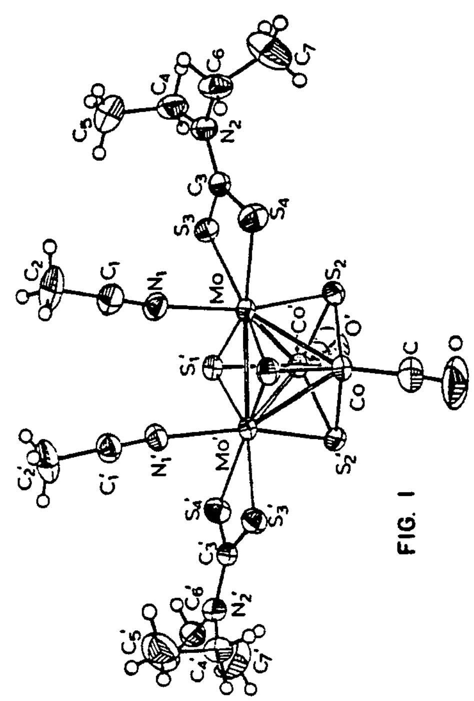

FIG. I

EP 0 319 624 A1

# HETEROMETALLIC THIOCUBANES AND METHOD OF MAKING THEM

## FIELD OF THE INVENTION

This invention relates to heterometallic thiocubane compositions containing the $M_2^1\ M_2^2\ S_4$ cluster core and methods of making them wherein $M^1$ is Re, V, Mo or W but preferably Mo or W; and $M^2$ is Co, Cr, Cu, Ni, or Fe but preferably Co. More particularly, the invention relates to compositions of the formula $M_2^1\ M_2^2\ S_4 L_2^1\ L_2^2\ L_2^3$ wherein $M^1$ and $M^2$ are as above, $L^1$ is a bidentate sulfur and/or nitrogen bearing ligand (desirably a dithiolate and preferably a dialkyldithiocarbamate), $L^2$ is optional and may be an O, N, P, or S-containing monodentate donor ligand, and $L^3$ may be CO, a monodentate anion ligand such as a halide (preferably Cl), mercaptide or alkoxide, or another O, N, P, or S containing monodentate donor ligand. The compositions are suitable for making active hydrotreating catalysts.

## BACKGROUND OF THE INVENTION

Thiocubane clusters containing a homometallic core $M_4S_4$ are known in the art. The thiocubane core is so-named because of its molecular architecture, i.e., two tetrahedra of metal and sulfur atoms interlock so that the metal atoms and bridging sulfurs occupy the alternate corners of a distorted or approximate cube. Homometallic thiocubane structures containing, e.g., Co, Fe, Mo, have been synthesized and discussed at length in the chemical literature. See, e.g., Mak et al, Angew. Chem. Int. Ed. Engl. 23 (1984), pp. 391-2; Shibahara et al, J. Am. Chem. Soc. (1984), 106, pp. 789-791; Chu et al, J. Am. Chem. Soc. (1982), v. 104, pp. 3409-3422 (and references cited therein) and Simon et al, J. Am. Chem. Soc. (1973), v. 95, pp. 2164-2174.

Compositions containing heterometallic thiocubane clusters have also been studied. The particular interest in the $Fe_3MoS_4$ cluster, because of its possible function as the biologically active part of nitrogenase, has led to the attempted synthesis of other similar compositions. See, e.g., Curtis et al, Inorg. Chem., v. 22, pp. 2661-2; Brunner et al, Agnew. Chem. Int. Ed. Engl 22 (1983), pg. 549; Brunner et al, J. Organometallic Chem., 240 (1982) C41-C44; Holm, Chem. Soc. Rev. (1981), v. 10, p. 455; and Armstrong et al., Inorg. Chem. (1982) v. 21, 1699-1701.

In addition to the interest shown in the bimetallic thiocubane cluster as a biologically active enzyme constituent, others have suggested that sulfided clusters containing molybdenum and a Group VIII metal, e.g., Fe, Co or Ni, may be useful as models in clarifying the somewhat poorly understood activity of hydrodesulfurization catalysts based on "sulfided" iron, cobalt, or nickel molybdates and tungstates on oxide supports. See, Curtis et al, supra, and the references cited therein; Gates et al, "Chemistry of Catalytic Processes", McGraw-Hill, New York (1979), pp. 390-445.

In the earlier syntheses of the thiocubane core, the approach was typically "spontaneous assembly". See, Holm, supra. Later work in homometallic transition metal sulfide chemistry led to smaller clusters which could be considered fragments of the thiocubane unit. These fragments, e.g., $Cp_2M_2S_4$ and related compounds (where Cp represents the cylcopentadienyl ligand), are potential building blocks for heteronuclear thiocubane clusters and can be used to form clusters with $M_2M'_2\ (\mu^3\text{-}S)_4$ cores. See, the two Brunner et al articles, supra.

None of the prior art shows the synthesis of $M_2^1\ M_2^2\ (\mu\ ^3\text{-}S)_4 L_2^1\ L_2^2\ L_2^3$ where $M^1$ is Re, V, Mo or W, $M^2$ is Co, Cr, Cu, Ni or Fe, $L^1$ is a bidentate sulfur and/or nitrogen bearing ligand, and $L^2$ is optional but may be an S, N, P, or O monodentate donor ligand, e.g., a solvent or other Lewis base molecule, and $L^3$ may be CO, a monodentate anion ligand such as a halide (preferably Cl), mercaptide or alkoxide, or another O, N, P, or S containing monodentate donor ligand.

## SUMMARY OF THE INVENTION

This invention deals with compositions containing heterometallic thiocubane nuclei. In particular the compositions have the generalized formula $M_2^1\ M_2^2\ (\mu\ ^3\text{-}S)_4 L_2^1\ L_2^2\ L_2^3$ where $M^1$ is Re, V, Mo or W (but preferably Mo or W); $M^2$ is Co, Cr, Cu, Ni or Fe (but preferably Co); $L^1$ is a bidentate sulfur and/or nitrogen bearing ligand such as dithiolates and particularly xanthate, o-aminobenzenethiolate, dithiophosphinate, dithiophosphate (but preferably a dithiocarbamate ($S_2CNR_2$) where R is independently H, or a hydrocarbyl such as methyl, ethyl, propyl, butyl, phenyl or mixtures of such groups, but preferably ethyl); $L^2$ is optional but may be an S, N, P, or O monodentate donor ligand, e.g., a solvent or other Lewis base molecule such as a pyridine, ether or phosphine ligand (but is preferably acetonitrile); and $L^3$ may be CO, a monodentate anion ligand such as a halide (preferably Cl), mercaptide or alkoxide, or another O, N, P, or S containing monodentate donor ligand.

The heterometallic thiocubane composition is preferably synthesized using novel dimeric neutral complexes of, e.g., tungsten, sulfide and dialkyldithiocarbamates.

The heterometallic thiocubane compositions have various uses but are especially useful in the preparation of catalysts for hydrotreating hydrocarbons containing sulfur-bearing compounds.

## BRIEF DESCRIPTION OF THE DRAWINGS

Figure 1 is a molecular depiction of one composition, i.e., $Mo_2Co_2(\mu^3\text{-}S)_4((C_2H_5)_2NCS_2)_2\text{-}(CO)_2(CH_3CN)_2$, within the scope of the invention.

Figure 2 is a molecular depiction of one composition, i.e., $Mo_2Cu_2(\mu^3\text{-}S)_4((C_4C_9)_2NCS_2)_2\text{-}(Cl)_2$, within the scope of the invention.

## DESCRIPTION OF THE INVENTION

The invention, as noted above, is generically a composition of matter containing certain heterometallic thiocubane clusters. The broad formula for the composition is:

$$M^1_2\, M^2_2\, (\mu^3\text{-}S)_4 L^1_2\, L^2_2\, L^3_2$$

where:

$M^1$ is Re, V, Mo or W; preferably Mo or W;

$M^2$ is Co, Cr, Cu, Ni or Fe; preferably Co;

$L^1$ is a bidentate sulfur and/or nitrogen-bearing ligand such as amino benzene thiolate or dithiolates, particularly xanthate, dithiophosphinate, dithiophosphate, dithiocarbamate, etc.; preferably dithiocarbamate ($S_2CNR_2$) where R is independently an H or a hydroarbyl, such as methyl, ethyl, propyl, butyl, phenyl, most preferably ethyl; other suitable ligands include those having the formula: $C_6H_4SNH_2$, $SCH_2CH_2S$, and $CH_3NHCH_2(CH_3)_2S$.

$L^2$ is optional but may be a monodentate S, N, P, or O donor ligand, e.g., a solvent or other Lewis base molecule such as a pyridine, ether or phosphine but preferalβly acetonitrile. The thiocubane core is, however, stable without the presence of $L^2$.

$L^3$ may be CO, a monodentate anion ligand such as a halide (preferably Cl), mercaptide or alkoxide, or another O, N, P, or S containing monodentate donor ligand.

The preferred method of synthesizing the inventive heterometallic thiocubanes involves the addition of a generally stoichiometric amount of a low valent complex based upon one of the "$M^2$" metals Co, Cr, Cu, Ni or Fe such as $Co_2(CO)_8$, $Ni(CO)_4SO_2CuCl$ to a solution or slurry of $M^1_2\, S_4 L^1_2$. The metal $M^1$, as above, may be Re, V, Mo or W although preferably is Mo or W. To achieve the goal of including substantial sulfur in a hydrodesulfurization catalyst using the inventive compound as a precursor, the bidentate ligand should be a mono- or a dithiolate. Although a large number of such ligands may be used, e.g., amino benzene thiolates, xanthates, dithiophosphinates, dithiophosphates, the preferred ligand is a dithiocarbamate of the formula $S_2CNR_2$ wherein R is independently H or a hydrocarbyl or alkyl of $C_1$ to $C_{12}$. The diethyl form is especially preferred.

These two materials may be placed together in a suitable solvent which may, by default, act as the monodentate ligand $L^2$ (or $L^3$) above. Acetonitrile is especially useful.

These "inorganic synthons" obviously act as building blocks to the final inventive heterometallic thiocubane composition. The reaction usually proceeds at room temperature with no heat input required.

Although the syntheses of a majority of the materials used in producing the thiocubanes are known, the production of one such fragment is not, i.e., $W_2S_4(S_2CNR_2)_2$ where R is an H or a $C_1$ to $C_{12}$ hydrocarbyl group.

These fragments may be made by gently heating $(NEt_4)_2W_2S_{12}$ in an acetonitrile solution, or other aprotic solvent, in the presence of $R_2NCS_2{}^{-}_{2}$, $NH_4^+$, and $P(C_6H_5)_3$. When making the tungsten-based compound, the product is found in and may be isolated from an orange slurry.

This process may be used to produce compounds of the formula:

$$W_2S_4(S_2CNR^1R^2)_2$$

where $R^n$ = H, an alkyl of 1 to 12 carbon atoms, and aryl groups of 6 to 12 carbamates. $R^1$ need not be the same as $R^2$.

and also

$$W_2S_4(S_2COR)_2$$

where R are alkyl or aryl groups of the type discussed above.

Having thus described the invention in detail, following are a number of examples which further delineate the invention. These examples are not intended to be limiting in any manner to the invention claimed below.

## EXAMPLE 1

### Production of $(NEt_4)_2W_2S_{12}$

Excess sulfur (1.18 g, 4.60 mmol) was added to a stirred solution of $(NH_4)_2WS_4$ (3.20 g, 9.20 mmol) in 50 mL DMF and heated two hours at 110° while purging slowly with Ar. The resulting orange-red solution was allowed to cool, excess $NEt_4Br$ (2.55 g, 12.1 mmol) was added, and the mixture heated at 110° for an additional 60 min. Volatiles were removed at 60° under vacuum, leaving an oily orange-red solid. Repeated recrystallization of the product from acetonitrile with intermittent washings with toluene, methanol, and diethylether yielded 3.85 g (83%) of red crystalline $(NEt_4)_2W_2S_{12}$.

Anal. Calcd for $C_{16}H_{40}N_2S_{12}W_2$: C, 18.97, H, 3.98, N, 2.77, S, 37.98, W, 36.30. Found: C, 19.00, H, 3.86, N, 2.68, S, 37.44, W. 36.25. IR: 3000 (w), 2980 (w), 1474 (s), 1445 (m), 1432 (m), 1417 (w), 1390 (m), 1385 (m), 1312 (m), 1184 (w), 1168 (s), 1065 (w), 1049 (w), 996 (s), 777 (s), 506 (vs), 495 (sh), 460 (w), 423 (m), 414 (m), 405 (sh), 380 (m), 371 (w), 294 (m) $cm^{-1}$. FAB-MS (in tetramethylenesulfone) m/e for parent negative ion $[(NEt_4)W_2S_{12}]^-$(rel. abundance calc, exp): 878 (19,25); 879 (23,28); 880 (62,62); 881 (45,51); 882 (100,100), 883 (55,61); 884 (96,98); 885 (32,42); 886 (60,62); 887 (14,19); 888 (21,25). $^{183}W$ NMR (1.11g $(NEt_4)_2W_2S_{12}$ in 2.2 mL DMF and 0.7 mL DMF-$d_7$): 2131.

## EXAMPLE 2

### Production of $W_2S_4(S_2CNEt_2)_2$

An acetonitrile solution of (50 ml) containing $PPh_3$ (0.8 g, 3 mmol), $NH_4PF_6$ (0.48 g, 2.9 mmol), $Na(S_2CNEt_2)\cdot 3H_2O$ (0.35 g, 1.6 mmol), and $(NEt_4)_2W_2S_{12}$ (0.508 g, 0.502 mmol) made according to Example 1 was heated at 75° for 45 min., resulting in the formation of an orange slurry. Volatiles were removed in vacuo, leaving a mixture of orange and white solids. The mixture was cooled to 0° and washed with 2 x 15 ml $CH_3OH$, 2 x 20 ml acetone, and 3 x 20 ml ether. The resulting orange powder was dried under vacuum. Yield was 300 mg (75%). Air-stable $W_2S_4(S_2CNEt_2)_2$ is very slightly soluble in DMF and hot acetonitrile.

Anal. Calcd. for $C_{10}H_{20}N_2S_8W_2$: C, 15.16; H, 2.54; N, 3.53; S, 32.36. Found: C, 14.94; H, 2.30; N, 3.57; S, 32.34. IR: 2980 (w), 2935 (w), 1530 (s), 1456 (m), 1440 (m), 1382 (w), 1358 (m), 1297 (w), 1281 (s), 1201 (m), 1152 (m), 1098 (w), 1077 (m), 1006 (w), 996 (w), 908 (w), 847 (w), 779 (w), 527 (s), 519 (s), 445 (m), 371 (m), 323 (m) $cm^{-1}$. Field desorption mass spectrum m/e for parent $W_2S_8C_{10}H_{20}N_2$, relative abundance (calc., exp.): 788 (21,21); 789 (26,24); 790 (66,68); 791 (46,43); 792 (100,100); 793 (52,60); 794 (89,79); 795 (26,32); 796 (50,41).

## EXAMPLE 3

### Production of $W_2S_4(S_2CN(i\text{-}C_4H_9)_2)_2$

The procedure of Example 2 was repeated using $Na(S_2CN(i\text{-}C_4H_9)_2)$ instead of the diethyl analog. The resulting product had characteristic IR bands at 535, 523, 448, 372 and 328 $cm^{-1}$ (all ± 5 $cm^{-1}$).

## EXAMPLE 4

### Production of $(Et_2NCS_2)_2(MeCN)_2W_2(\mu^3\text{-}S)_4Co_2(CO)_2$

In an inert atmosphere glove box, solid $Co_2(CO)_8$ (0.505 g, 1.48 mmol) was added over a period of five minutes to a stirred orange slurry of $W_2S_4(S_2CNEt_2)_2$ (1.175 g, 1.49 mmol) in 80 ml acetonitrile as made according to Example 2. The solution darkened to a brown-black slurry as gas was evolved. The mixture was stirred 2 hours and then filtered. The filtrate was concentrated to ca. 60 ml and placed in a -10° freezer overnight. Black crystalline $(Et_2NCS_2)_2(MeCN)_2W_2(\mu^3\text{-}S)_4Co_2(CO)_2$ was filtered from the dark solution on a sintered-glass Schlenk filter, washed with 8 mL acetonitrile, and dried in vacuo. Yield was 650 mg (42%).

Anal. Calcd. for $C_{16}H_{26}N_4O_2S_8Co_2W_2$: C, 18.33; H, 2.50; N, 5.34; W, 35.07. Found: C, 18.03; H, 2.49; N, 5.27; W, 35.27. IR (KBr pellet): 1961(s), 1938(s), 1505(s), 1456(w), 14.36(m), 1358(w), 1300(w), 1273(m), 1209(m), 1147(m), 1095(w), 1075(m), 915(w), 847(w), 783(w), 521(m), 394(w), and 368(w) $cm^{-1}$.

## EXAMPLE 5

### Production of $(Et_2NCS_2)_2(MeCN)_2Mo_2(\mu^3\text{-}S)_4CO_2(CO)_2$

In an inert atmosphere glove box, solid $Co_2(CO)_8$ (sublimed, 0.111 g, 0.324 mmoles) was added over a period of several minutes to a stirred slurry of red-brown $Mo_2S_4(S_2CNEt_2)_2$ (0.200 g, 0.324 mmoles) in 20 ml dry $CH_3CN$ (distilled from $CaH_2$). This material was made via the process disclosed in Miller et al, J. Am. Chem. Soc. (1980), pp. 5104-5106. The solution darkened rapidly with gentle evolution of carbon monoxide. After stirring for two hours, the solution was filtered and the dark black-brown filtrate was concentrated under vacuum to a volume of 5 ml. The mixture was then allowed to stand 18 hours. Black crystalline $(Et_2NCS_2)_2(MeCN)_2Mo_2(\mu^3\text{-}S)_4Co_2(CO)_2$ was filtered on a medium porosity sintered glass frit, and dried in vacuo. Yield was 200 mg (71%).

IR spectrum (KBr pellet): 1983(s), 1960(s), 1505(s), 1465(m), 1442(m), 1385(w), 1368(m), 1310(w), 1280(s), 1220(m), 1152(m), 1103(w), 1083-(m), 1008(w), 976(w), 922(w), 851(w), 790(w), 578-(w), 521(m), 498(w), 436(vw), 401(w), 371(m). Anal. Calcd. for $C_{16}H_{26}N_4O_2S_8Co_2Mo_2$: C, 22.02; H, 3.00; N, 6.42; Mo, 21.99; Co, 13.51. Found C, 18.59; H, 2.83; N, 5.11; Mo, 21.10; Co, 14.22.

A single crystal x-ray diffraction study was carried out on the product. The structure is illustrated in Figure 1 and the x-ray structure factors are given in Table 1. The molecule contains a $Co_2Mo_2(\mu_3\text{-}S)_4$ core. The four metal atoms are joined by six metal-metal bonds forming an approximate tetrahedron of $C_{2v}$ symmetry. Each triangular face of the tetrahedron is capped by a sulfur, to form the overall "thiocubane" core. Each cobalt is further bonded to a single terminal CO. The coordination environment about the cobalt atoms (discounting the M-M bonds) very nearly tetrahedral. Each molybdenum atom is bound to two dithiocarbamate sulfur atoms and to the nitrogen of an acetonitrile molecule, in addition to three capping "$\mu^3$-S" atoms. The coordination environment about the molybdenum atoms is distorted octahedral. The molecule resides on a crystallographic $C_2$ axis which bisects the Mo-Mo′ and Co-Co′ bonds.

# TABLE I

MO2CO2S4(CO)2(NCCH3)2[S2CH(C2H5)2]2

| H | K | L | FOBS | FCAL | H | K | L | FOBS | FCAL |
|---|---|---|---|---|---|---|---|---|---|
| 2 | 0 | 0 | 4951 | 4967 | 20 | 4 | 0 | 202 | 192 |
| 4 | 0 | 0 | 1638 | 1654 | 24 | 4 | 0 | 295 | 289 |
| 6 | 0 | 0 | 2661 | 2633 | 1 | 5 | 0 | 2267 | 2247 |
| 8 | 0 | 0 | 5917 | 5956 | 3 | 5 | 0 | 2207 | 2178 |
| 10 | 0 | 0 | 4832 | 4831 | 5 | 5 | 0 | 206 | 190 |
| 12 | 0 | 0 | 2120 | 2099 | 7 | 5 | 0 | 1914 | 1887 |
| 14 | 0 | 0 | 641 | 656 | 9 | 5 | 0 | 1668 | 1658 |
| 16 | 0 | 0 | 679 | 675 | 11 | 5 | 0 | 1846 | 1841 |
| 18 | 0 | 0 | 1518 | 1511 | 13 | 5 | 0 | 674 | 685 |
| 20 | 0 | 0 | 1127 | 1119 | 15 | 5 | 0 | 212 | 102 |
| 22 | 0 | 0 | 637 | 626 | 17 | 5 | 0 | 776 | 776 |
| 24 | 0 | 0 | 566 | 543 | 19 | 5 | 0 | 728 | 719 |
| 1 | 1 | 0 | 1089 | 1082 | 21 | 5 | 0 | 623 | 623 |
| 3 | 1 | 0 | 968 | 959 | 23 | 5 | 0 | 217 | 231 |
| 5 | 1 | 0 | 793 | 797 | 0 | 6 | 0 | 3088 | 3042 |
| 7 | 1 | 0 | 604 | 618 | 2 | 6 | 0 | 2843 | 2796 |
| 9 | 1 | 0 | 1777 | 1775 | 4 | 6 | 0 | 362 | 366 |
| 11 | 1 | 0 | 476 | 462 | 6 | 6 | 0 | 668 | 675 |
| 13 | 1 | 0 | 187 | 206 | 8 | 6 | 0 | 1851 | 1839 |
| 15 | 1 | 0 | 451 | 439 | 10 | 6 | 0 | 2127 | 2112 |
| 17 | 1 | 0 | 274 | 263 | 12 | 6 | 0 | 1091 | 1107 |
| 19 | 1 | 0 | 520 | 526 | 14 | 6 | 0 | 489 | 491 |
| 27 | 1 | 0 | 244 | 222 | 18 | 6 | 0 | 692 | 707 |
| 0 | 2 | 0 | 1656 | 1650 | 20 | 6 | 0 | 564 | 558 |
| 2 | 2 | 0 | 2666 | 2658 | 22 | 6 | 0 | 574 | 579 |
| 4 | 2 | 0 | 836 | 829 | 24 | 6 | 0 | 502 | 504 |
| 6 | 2 | 0 | 344 | 349 | 1 | 7 | 0 | 150 | 102 |
| 8 | 2 | 0 | 1955 | 1974 | 3 | 7 | 0 | 802 | 807 |
| 10 | 2 | 0 | 1651 | 1632 | 5 | 7 | 0 | 599 | 596 |
| 12 | 2 | 0 | 827 | 802 | 7 | 7 | 0 | 320 | 314 |
| 14 | 2 | 0 | 289 | 294 | 9 | 7 | 0 | 316 | 307 |
| 16 | 2 | 0 | 115 | 126 | 11 | 7 | 0 | 643 | 668 |
| 18 | 2 | 0 | 590 | 594 | 13 | 7 | 0 | 1342 | 1364 |
| 20 | 2 | 0 | 503 | 490 | 15 | 7 | 0 | 258 | 264 |
| 22 | 2 | 0 | 353 | 349 | 17 | 7 | 0 | 527 | 523 |
| 24 | 2 | 0 | 268 | 278 | 21 | 7 | 0 | 486 | 484 |
| 1 | 3 | 0 | 3046 | 3044 | 23 | 7 | 0 | 268 | 269 |
| 3 | 3 | 0 | 974 | 932 | 0 | 8 | 0 | 192 | 184 |
| 5 | 3 | 0 | 828 | 811 | 2 | 8 | 0 | 333 | 309 |
| 7 | 3 | 0 | 1481 | 1509 | 4 | 8 | 0 | 510 | 526 |
| 9 | 3 | 0 | 1836 | 1815 | 6 | 8 | 0 | 609 | 595 |
| 11 | 3 | 0 | 353 | 338 | 8 | 8 | 0 | 292 | 272 |
| 13 | 3 | 0 | 730 | 726 | 10 | 8 | 0 | 226 | 188 |
| 15 | 3 | 0 | 479 | 461 | 12 | 8 | 0 | 746 | 752 |
| 17 | 3 | 0 | 935 | 926 | 14 | 8 | 0 | 132 | 145 |
| 19 | 3 | 0 | 708 | 713 | 16 | 8 | 0 | 327 | 335 |
| 23 | 3 | 0 | 129 | 139 | 18 | 8 | 0 | 283 | 277 |
| 0 | 4 | 0 | 4682 | 4724 | 20 | 8 | 0 | 563 | 562 |
| 2 | 4 | 0 | 1863 | 1869 | 22 | 8 | 0 | 476 | 470 |
| 4 | 4 | 0 | 662 | 642 | 1 | 9 | 0 | 1706 | 1695 |

TABLE 1-continued

| MO2CO2S4(CO)2(NCCH3)2[S2CH(C2H5)2]2 | | | | | | | | | |
|---|---|---|---|---|---|---|---|---|---|
| H | K | L | FOBS | FCAL | H | K | L | FOBS | FCAL |
| 6 | 4 | 0 | 359 | 349 | 3 | 9 | 0 | 998 | 989 |
| 8 | 4 | 0 | 2656 | 2596 | 5 | 9 | 0 | 404 | 409 |
| 10 | 4 | 0 | 2096 | 2117 | 7 | 9 | 0 | 1276 | 1284 |
| 12 | 4 | 0 | 346 | 339 | 9 | 9 | 0 | 1452 | 1431 |
| 14 | 4 | 0 | 259 | 263 | 11 | 9 | 0 | 884 | 873 |
| 18 | 4 | 0 | 622 | 612 | 13 | 9 | 0 | 164 | 185 |
| 15 | 9 | 0 | 562 | 566 | −10 | 2 | 1 | 1180 | 1147 |
| 17 | 9 | 0 | 655 | 670 | −8 | 2 | 1 | 811 | 801 |
| 19 | 9 | 0 | 490 | 496 | −6 | 2 | 1 | 1215 | 1254 |
| 0 | 10 | 0 | 820 | 824 | −4 | 2 | 1 | 1016 | 972 |
| 2 | 10 | 0 | 451 | 473 | −2 | 2 | 1 | 2168 | 2199 |
| 8 | 10 | 0 | 260 | 267 | 0 | 2 | 1 | 477 | 460 |
| 10 | 10 | 0 | 291 | 312 | 2 | 2 | 1 | 2305 | 2244 |
| 14 | 10 | 0 | 248 | 267 | 4 | 2 | 1 | 659 | 649 |
| 16 | 10 | 0 | 272 | 298 | 6 | 2 | 1 | 860 | 891 |
| 1 | 11 | 0 | 1141 | 1134 | 8 | 2 | 1 | 981 | 1021 |
| 3 | 11 | 0 | 1036 | 1046 | 10 | 2 | 1 | 174 | 188 |
| 5 | 11 | 0 | 182 | 179 | 12 | 2 | 1 | 387 | 395 |
| 7 | 11 | 0 | 629 | 642 | 16 | 2 | 1 | 675 | 654 |
| 9 | 11 | 0 | 604 | 610 | 18 | 2 | 1 | 1529 | 1476 |
| 11 | 11 | 0 | 1066 | 1064 | 20 | 2 | 1 | 586 | 574 |
| 13 | 11 | 0 | 1007 | 1006 | 22 | 2 | 1 | 517 | 493 |
| 15 | 11 | 0 | 177 | 200 | 26 | 2 | 1 | 807 | 757 |
| 0 | 12 | 0 | 399 | 406 | −23 | 3 | 1 | 210 | 219 |
| 2 | 12 | 0 | 372 | 397 | −19 | 3 | 1 | 383 | 356 |
| 4 | 12 | 0 | 214 | 239 | −17 | 3 | 1 | 395 | 391 |
| 6 | 12 | 0 | 372 | 360 | −13 | 3 | 1 | 241 | 224 |
| 8 | 12 | 0 | 429 | 453 | −11 | 3 | 1 | 623 | 614 |
| 10 | 12 | 0 | 314 | 295 | −9 | 3 | 1 | 1252 | 1209 |
| 12 | 12 | 0 | 349 | 360 | −7 | 3 | 1 | 111 | 104 |
| 1 | 13 | 0 | 210 | 216 | −5 | 3 | 1 | 740 | 733 |
| 3 | 13 | 0 | 317 | 317 | −3 | 3 | 1 | 618 | 611 |
| 5 | 13 | 0 | 249 | 260 | −1 | 3 | 1 | 2024 | 1997 |
| 9 | 13 | 0 | 193 | 207 | 1 | 3 | 1 | 221 | 231 |
| −25 | 1 | 1 | 348 | 338 | 3 | 3 | 1 | 267 | 254 |
| −23 | 1 | 1 | 389 | 394 | 5 | 3 | 1 | 440 | 431 |
| −21 | 1 | 1 | 666 | 676 | 7 | 3 | 1 | 443 | 433 |
| −19 | 1 | 1 | 1170 | 1178 | 11 | 3 | 1 | 306 | 317 |
| −17 | 1 | 1 | 696 | 695 | 13 | 3 | 1 | 210 | 220 |
| −15 | 1 | 1 | 515 | 525 | 15 | 3 | 1 | 448 | 444 |
| −13 | 1 | 1 | 1186 | 1211 | 17 | 3 | 1 | 232 | 246 |
| −11 | 1 | 1 | 3331 | 3248 | 19 | 3 | 1 | 305 | 288 |
| −9 | 1 | 1 | 3748 | 3860 | 21 | 3 | 1 | 442 | 428 |
| −7 | 1 | 1 | 706 | 706 | 25 | 3 | 1 | 160 | 128 |
| −5 | 1 | 1 | 465 | 472 | −22 | 4 | 1 | 266 | 275 |
| −3 | 1 | 1 | 3777 | 3637 | −20 | 4 | 1 | 569 | 598 |
| −1 | 1 | 1 | 5915 | 5903 | −18 | 4 | 1 | 675 | 677 |
| 1 | 1 | 1 | 2840 | 2847 | −14 | 4 | 1 | 434 | 436 |
| 3 | 1 | 1 | 1779 | 1770 | −12 | 4 | 1 | 1238 | 1250 |
| 7 | 1 | 1 | 2125 | 2096 | −10 | 4 | 1 | 1678 | 1694 |

TABLE 1-continued

| MO2CO2S4(CO)2(NCCH3)2[S2CH(C2H5)2]2 | | | | | | | | | |
|---|---|---|---|---|---|---|---|---|---|
| H | K | L | FOBS | FCAL | H | K | L | FOBS | FCAL |
| 9 | 1 | 1 | 2700 | 2710 | −8 | 4 | 1 | 1310 | 1254 |
| 11 | 1 | 1 | 1511 | 1547 | −6 | 4 | 1 | 204 | 236 |
| 13 | 1 | 1 | 939 | 974 | −4 | 4 | 1 | 2233 | 2150 |
| 15 | 1 | 1 | 487 | 497 | −2 | 4 | 1 | 3028 | 3001 |
| 17 | 1 | 1 | 963 | 953 | 0 | 4 | 1 | 2891 | 2844 |
| 19 | 1 | 1 | 958 | 934 | 2 | 4 | 1 | 612 | 591 |
| 21 | 1 | 1 | 574 | 576 | 4 | 4 | 1 | 1443 | 1429 |
| 23 | 1 | 1 | 616 | 585 | 6 | 4 | 1 | 1894 | 1888 |
| −22 | 2 | 1 | 467 | 475 | 8 | 4 | 1 | 2844 | 2821 |
| −18 | 2 | 1 | 241 | 272 | 10 | 4 | 1 | 1548 | 1543 |
| −14 | 2 | 1 | 487 | 519 | 14 | 4 | 1 | 368 | 360 |
| −12 | 2 | 1 | 674 | 663 | 16 | 4 | 1 | 1436 | 1410 |
| 18 | 4 | 1 | 1198 | 1175 | −7 | 7 | 1 | 659 | 674 |
| 20 | 4 | 1 | 873 | 860 | −5 | 7 | 1 | 583 | 576 |
| 22 | 4 | 1 | 358 | 361 | −3 | 7 | 1 | 1042 | 1052 |
| 24 | 4 | 1 | 284 | 250 | −1 | 7 | 1 | 1219 | 1194 |
| −25 | 5 | 1 | 349 | 351 | 1 | 7 | 1 | 1211 | 1194 |
| −23 | 5 | 1 | 262 | 252 | 3 | 7 | 1 | 659 | 661 |
| −21 | 5 | 1 | 392 | 383 | 5 | 7 | 1 | 530 | 517 |
| −19 | 5 | 1 | 933 | 954 | 7 | 7 | 1 | 804 | 780 |
| −17 | 5 | 1 | 458 | 471 | 9 | 7 | 1 | 1433 | 1392 |
| −13 | 5 | 1 | 1029 | 1032 | 11 | 7 | 1 | 1079 | 1061 |
| −11 | 5 | 1 | 2675 | 2685 | 13 | 7 | 1 | 523 | 529 |
| −9 | 5 | 1 | 3071 | 3038 | 15 | 7 | 1 | 241 | 251 |
| −7 | 5 | 1 | 698 | 718 | 17 | 7 | 1 | 618 | 599 |
| −5 | 5 | 1 | 440 | 460 | 19 | 7 | 1 | 825 | 793 |
| −3 | 5 | 1 | 2203 | 2228 | 21 | 7 | 1 | 869 | 836 |
| −1 | 5 | 1 | 3894 | 3899 | 23 | 7 | 1 | 201 | 211 |
| 1 | 5 | 1 | 2799 | 2787 | −22 | 8 | 1 | 404 | 441 |
| 3 | 5 | 1 | 443 | 452 | −18 | 8 | 1 | 331 | 349 |
| 5 | 5 | 1 | 533 | 513 | −16 | 8 | 1 | 476 | 500 |
| 7 | 5 | 1 | 1367 | 1332 | −14 | 8 | 1 | 479 | 531 |
| 9 | 5 | 1 | 1937 | 1932 | −10 | 8 | 1 | 617 | 610 |
| 11 | 5 | 1 | 920 | 911 | −8 | 8 | 1 | 346 | 336 |
| 13 | 5 | 1 | 1336 | 1312 | −6 | 8 | 1 | 186 | 184 |
| 15 | 5 | 1 | 658 | 660 | −4 | 8 | 1 | 368 | 373 |
| 17 | 5 | 1 | 706 | 688 | −2 | 8 | 1 | 457 | 444 |
| 19 | 5 | 1 | 609 | 588 | 0 | 8 | 1 | 524 | 514 |
| 21 | 5 | 1 | 514 | 506 | 2 | 8 | 1 | 552 | 553 |
| 23 | 5 | 1 | 571 | 541 | 4 | 8 | 1 | 936 | 943 |
| −24 | 6 | 1 | 406 | 423 | 6 | 8 | 1 | 468 | 486 |
| −22 | 6 | 1 | 710 | 741 | 8 | 8 | 1 | 901 | 884 |
| −20 | 6 | 1 | 504 | 528 | 12 | 8 | 1 | 325 | 305 |
| −18 | 6 | 1 | 177 | 177 | 14 | 8 | 1 | 285 | 271 |
| −14 | 6 | 1 | 992 | 1032 | 16 | 8 | 1 | 743 | 718 |
| −12 | 6 | 1 | 1412 | 1521 | 18 | 8 | 1 | 597 | 508 |
| −10 | 6 | 1 | 1189 | 1170 | 20 | 8 | 1 | 184 | 162 |
| −8 | 6 | 1 | 1064 | 1108 | −15 | 9 | 1 | 203 | 205 |
| −6 | 6 | 1 | 211 | 232 | −13 | 9 | 1 | 513 | 541 |
| −4 | 6 | 1 | 1519 | 1517 | −7 | 9 | 1 | 346 | 331 |

## TABLE 1-continued

| | | | MO2CO2S4(CO)2(NCCH3)2[S2CH(C2H5)2]2 | | | | | | |
|---|---|---|---|---|---|---|---|---|---|
| H | K | L | FOBS | FCAL | H | K | L | FOBS | FCAL |
| −2 | 6 | 1 | 1516 | 1516 | −5 | 9 | 1 | 593 | 593 |
| 0 | 6 | 1 | 1527 | 1482 | −3 | 9 | 1 | 834 | 827 |
| 2 | 6 | 1 | 2328 | 2331 | 3 | 9 | 1 | 191 | 172 |
| 6 | 6 | 1 | 981 | 956 | 5 | 9 | 1 | 1430 | 1420 |
| 8 | 6 | 1 | 625 | 617 | 7 | 9 | 1 | 939 | 917 |
| 10 | 6 | 1 | 1291 | 1252 | 9 | 9 | 1 | 417 | 379 |
| 12 | 6 | 1 | 1108 | 1082 | 11 | 9 | 1 | 591 | 591 |
| 14 | 6 | 1 | 278 | 281 | 13 | 9 | 1 | 614 | 603 |
| 16 | 6 | 1 | 212 | 193 | 15 | 9 | 1 | 1013 | 1017 |
| 18 | 6 | 1 | 185 | 195 | 17 | 9 | 1 | 658 | 645 |
| 20 | 6 | 1 | 308 | 328 | 19 | 9 | 1 | 629 | 613 |
| −23 | 7 | 1 | 430 | 418 | −18 | 10 | 1 | 303 | 315 |
| −21 | 7 | 1 | 386 | 403 | −14 | 10 | 1 | 718 | 735 |
| −19 | 7 | 1 | 228 | 254 | −12 | 10 | 1 | 1051 | 1037 |
| −15 | 7 | 1 | 434 | 468 | −10 | 10 | 1 | 1014 | 1007 |
| −13 | 7 | 1 | 668 | 701 | −8 | 10 | 1 | 976 | 907 |
| −11 | 7 | 1 | 663 | 727 | −6 | 10 | 1 | 187 | 167 |
| −9 | 7 | 1 | 550 | 562 | −4 | 10 | 1 | 1017 | 1044 |
| −2 | 10 | 1 | 1554 | 1571 | 8 | 0 | 2 | 3478 | 3537 |
| 0 | 10 | 1 | 1399 | 1407 | 10 | 0 | 2 | 1197 | 1186 |
| 2 | 10 | 1 | 1325 | 1328 | 12 | 0 | 2 | 858 | 872 |
| 6 | 10 | 1 | 1119 | 1107 | 14 | 0 | 2 | 617 | 614 |
| 8 | 10 | 1 | 999 | 1005 | 16 | 0 | 2 | 1730 | 1681 |
| 10 | 10 | 1 | 1316 | 1312 | 18 | 0 | 2 | 1023 | 1011 |
| 12 | 10 | 1 | 723 | 740 | 20 | 0 | 2 | 374 | 366 |
| 14 | 10 | 1 | 276 | 258 | 22 | 0 | 2 | 271 | 297 |
| 16 | 10 | 1 | 449 | 441 | 24 | 0 | 2 | 446 | 448 |
| 18 | 10 | 1 | 548 | 549 | 26 | 0 | 2 | 725 | 724 |
| −11 | 11 | 1 | 251 | 281 | −25 | 1 | 2 | 267 | 280 |
| −9 | 11 | 1 | 414 | 441 | −19 | 1 | 2 | 312 | 296 |
| −7 | 11 | 1 | 307 | 299 | −17 | 1 | 2 | 675 | 672 |
| −1 | 11 | 1 | 352 | 378 | −15 | 1 | 2 | 607 | 590 |
| 1 | 11 | 1 | 517 | 503 | −11 | 1 | 2 | 191 | 133 |
| 3 | 11 | 1 | 456 | 466 | −9 | 1 | 2 | 1751 | 1795 |
| 5 | 11 | 1 | 203 | 194 | −7 | 1 | 2 | 987 | 1033 |
| 9 | 11 | 1 | 200 | 236 | −5 | 1 | 2 | 553 | 555 |
| 11 | 11 | 1 | 497 | 510 | −3 | 1 | 2 | 1603 | 1623 |
| 13 | 11 | 1 | 509 | 499 | −1 | 1 | 2 | 398 | 390 |
| 15 | 11 | 1 | 187 | 208 | 1 | 1 | 2 | 814 | 777 |
| −12 | 12 | 1 | 774 | 752 | 3 | 1 | 2 | 2183 | 2185 |
| −10 | 12 | 1 | 381 | 373 | 5 | 1 | 2 | 434 | 429 |
| −8 | 12 | 1 | 236 | 236 | 7 | 1 | 2 | 1374 | 1382 |
| −4 | 12 | 1 | 419 | 425 | 9 | 1 | 2 | 895 | 900 |
| −2 | 12 | 1 | 485 | 499 | 11 | 1 | 2 | 537 | 562 |
| 0 | 12 | 1 | 622 | 630 | 13 | 1 | 2 | 285 | 292 |
| 2 | 12 | 1 | 885 | 890 | 15 | 1 | 2 | 647 | 649 |
| 4 | 12 | 1 | 437 | 445 | 17 | 1 | 2 | 1746 | 1711 |
| 8 | 12 | 1 | 251 | 274 | 19 | 1 | 2 | 685 | 685 |
| 10 | 12 | 1 | 772 | 763 | 21 | 1 | 2 | 638 | 625 |
| 12 | 12 | 1 | 721 | 725 | 25 | 1 | 2 | 748 | 709 |

## TABLE 1-continued

MO2CO2S4(CO)2(NCCH3)2[S2CH(C2H5)2]2

| H | K | L | FOBS | FCAL | H | K | L | FOBS | FCAL |
|---|---|---|---|---|---|---|---|---|---|
| −9 | 13 | 1 | 263 | 288 | −26 | 2 | 2 | 279 | 301 |
| −5 | 13 | 1 | 279 | 313 | −24 | 2 | 2 | 373 | 380 |
| −3 | 13 | 1 | 680 | 707 | −22 | 2 | 2 | 311 | 306 |
| −1 | 13 | 1 | 425 | 441 | −20 | 2 | 2 | 282 | 280 |
| 1 | 13 | 1 | 436 | 428 | −16 | 2 | 2 | 365 | 364 |
| 5 | 13 | 1 | 704 | 711 | −14 | 2 | 2 | 896 | 881 |
| 7 | 13 | 1 | 782 | 782 | −12 | 2 | 2 | 753 | 762 |
| 9 | 13 | 1 | 556 | 571 | −10 | 2 | 2 | 760 | 713 |
| −26 | 0 | 2 | 434 | 421 | −8 | 2 | 2 | 152 | 108 |
| −24 | 0 | 2 | 817 | 822 | −4 | 2 | 2 | 1313 | 1356 |
| −22 | 0 | 2 | 1096 | 1107 | −2 | 2 | 2 | 1413 | 1419 |
| −20 | 0 | 2 | 1591 | 1569 | 0 | 2 | 2 | 1573 | 1560 |
| −18 | 0 | 2 | 592 | 595 | 2 | 2 | 2 | 1180 | 1176 |
| −16 | 0 | 2 | 1418 | 1397 | 4 | 2 | 2 | 494 | 467 |
| −14 | 0 | 2 | 1816 | 1784 | 6 | 2 | 2 | 450 | 466 |
| −12 | 0 | 2 | 4108 | 4013 | 8 | 2 | 2 | 823 | 831 |
| −10 | 0 | 2 | 2924 | 2818 | 10 | 2 | 2 | 863 | 864 |
| −8 | 0 | 2 | 353 | 381 | 12 | 2 | 2 | 866 | 871 |
| −6 | 0 | 2 | 2451 | 2405 | 14 | 2 | 2 | 145 | 125 |
| −4 | 0 | 2 | 3143 | 3043 | 16 | 2 | 2 | 494 | 484 |
| −2 | 0 | 2 | 4371 | 4488 | 18 | 2 | 2 | 778 | 759 |
| 0 | 0 | 2 | 2190 | 2190 | 20 | 2 | 2 | 516 | 503 |
| 2 | 0 | 2 | 2088 | 2068 | 22 | 2 | 2 | 163 | 175 |
| 6 | 0 | 2 | 1789 | 1769 | 24 | 2 | 2 | 228 | 211 |
| 26 | 2 | 2 | 367 | 333 | −1 | 5 | 2 | 2346 | 2353 |
| −25 | 3 | 2 | 277 | 297 | 1 | 5 | 2 | 655 | 661 |
| −17 | 3 | 2 | 1061 | 1079 | 3 | 5 | 2 | 653 | 648 |
| −15 | 3 | 2 | 860 | 876 | 5 | 5 | 2 | 1455 | 1442 |
| −13 | 3 | 2 | 435 | 426 | 7 | 5 | 2 | 1493 | 1475 |
| −11 | 3 | 2 | 299 | 276 | 9 | 5 | 2 | 1106 | 1105 |
| −9 | 3 | 2 | 1479 | 1375 | 11 | 5 | 2 | 561 | 560 |
| −7 | 3 | 2 | 2320 | 2464 | 13 | 5 | 2 | 604 | 595 |
| −5 | 3 | 2 | 1495 | 1466 | 15 | 5 | 2 | 1004 | 900 |
| −3 | 3 | 2 | 558 | 570 | 17 | 5 | 2 | 452 | 437 |
| −1 | 3 | 2 | 137 | 148 | 19 | 5 | 2 | 693 | 602 |
| 1 | 3 | 2 | 1268 | 1225 | 23 | 5 | 2 | 331 | 333 |
| 3 | 3 | 2 | 288 | 314 | −24 | 6 | 2 | 467 | 463 |
| 5 | 3 | 2 | 900 | 903 | −22 | 6 | 2 | 439 | 430 |
| 7 | 3 | 2 | 2724 | 2737 | −20 | 6 | 2 | 478 | 489 |
| 9 | 3 | 2 | 1623 | 1622 | −16 | 6 | 2 | 580 | 609 |
| 11 | 3 | 2 | 441 | 464 | −14 | 6 | 2 | 760 | 819 |
| 13 | 3 | 2 | 297 | 284 | −12 | 6 | 2 | 831 | 896 |
| 15 | 3 | 2 | 1551 | 1502 | −10 | 6 | 2 | 1085 | 1119 |
| 17 | 3 | 2 | 2237 | 2182 | −8 | 6 | 2 | 154 | 108 |
| 19 | 3 | 2 | 1362 | 1324 | −6 | 6 | 2 | 222 | 189 |
| 21 | 3 | 2 | 656 | 641 | −4 | 6 | 2 | 509 | 511 |
| 25 | 3 | 2 | 1024 | 980 | −2 | 6 | 2 | 946 | 953 |
| −24 | 4 | 2 | 226 | 235 | 0 | 6 | 2 | 1542 | 1527 |
| −22 | 4 | 2 | 378 | 371 | 2 | 6 | 2 | 706 | 703 |
| −20 | 4 | 2 | 850 | 876 | 4 | 6 | 2 | 1466 | 1466 |

## TABLE 1-continued

MO2CO2S4(CO)2(NCCH3)2[S2CH(C2H5)2]2

| H | K | L | FOBS | FCAL | H | K | L | FOBS | FCAL |
|---|---|---|---|---|---|---|---|---|---|
| −18 | 4 | 2 | 605 | 623 | 6 | 6 | 2 | 541 | 523 |
| −16 | 4 | 2 | 243 | 212 | 8 | 6 | 2 | 1252 | 1221 |
| −14 | 4 | 2 | 445 | 419 | 10 | 6 | 2 | 1233 | 1211 |
| −12 | 4 | 2 | 1578 | 1551 | 12 | 6 | 2 | 1506 | 1480 |
| −10 | 4 | 2 | 1672 | 1643 | 14 | 6 | 2 | 251 | 280 |
| −8 | 4 | 2 | 423 | 418 | 16 | 6 | 2 | 606 | 573 |
| −6 | 4 | 2 | 753 | 751 | 18 | 6 | 2 | 1043 | 1028 |
| −2 | 4 | 2 | 2151 | 2127 | 20 | 6 | 2 | 786 | 759 |
| 0 | 4 | 2 | 564 | 560 | 22 | 6 | 2 | 323 | 316 |
| 2 | 4 | 2 | 858 | 826 | −23 | 7 | 2 | 370 | 381 |
| 4 | 4 | 2 | 1584 | 1554 | −21 | 7 | 2 | 328 | 331 |
| 6 | 4 | 2 | 774 | 766 | −17 | 7 | 2 | 346 | 353 |
| 8 | 4 | 2 | 529 | 523 | −13 | 7 | 2 | 352 | 360 |
| 10 | 4 | 2 | 261 | 265 | −11 | 7 | 2 | 435 | 447 |
| 12 | 4 | 2 | 865 | 863 | −9 | 7 | 2 | 1014 | 1042 |
| 14 | 4 | 2 | 1066 | 1029 | −7 | 7 | 2 | 1403 | 1444 |
| 16 | 4 | 2 | 241 | 239 | −3 | 7 | 2 | 216 | 234 |
| 20 | 4 | 2 | 179 | 168 | −1 | 7 | 2 | 273 | 280 |
| 22 | 4 | 2 | 322 | 298 | 1 | 7 | 2 | 1849 | 1856 |
| −25 | 5 | 2 | 338 | 347 | 3 | 7 | 2 | 448 | 447 |
| −23 | 5 | 2 | 573 | 571 | 5 | 7 | 2 | 225 | 196 |
| −21 | 5 | 2 | 514 | 526 | 7 | 7 | 2 | 661 | 658 |
| −19 | 5 | 2 | 297 | 301 | 11 | 7 | 2 | 238 | 229 |
| −15 | 5 | 2 | 763 | 780 | 13 | 7 | 2 | 156 | 134 |
| −13 | 5 | 2 | 1611 | 1586 | 15 | 7 | 2 | 674 | 664 |
| −11 | 5 | 2 | 1126 | 1121 | 17 | 7 | 2 | 781 | 758 |
| −9 | 5 | 2 | 956 | 936 | 19 | 7 | 2 | 440 | 398 |
| −7 | 5 | 2 | 216 | 207 | 21 | 7 | 2 | 173 | 132 |
| −5 | 5 | 2 | 1635 | 1694 | −22 | 8 | 2 | 171 | 168 |
| −3 | 5 | 2 | 1705 | 1749 | −20 | 8 | 2 | 268 | 255 |
| −18 | 8 | 2 | 369 | 385 | −11 | 11 | 2 | 620 | 618 |
| −16 | 8 | 2 | 408 | 423 | −9 | 11 | 2 | 510 | 494 |
| −14 | 8 | 2 | 477 | 519 | −7 | 11 | 2 | 297 | 304 |
| −12 | 8 | 2 | 263 | 239 | −5 | 11 | 2 | 514 | 535 |
| −10 | 8 | 2 | 486 | 467 | −3 | 11 | 2 | 676 | 699 |
| −8 | 8 | 2 | 249 | 213 | −1 | 11 | 2 | 715 | 732 |
| −6 | 8 | 2 | 954 | 925 | 1 | 11 | 2 | 1112 | 1124 |
| −4 | 8 | 2 | 945 | 930 | 3 | 11 | 2 | 258 | 276 |
| −2 | 8 | 2 | 379 | 374 | 5 | 11 | 2 | 411 | 416 |
| 0 | 8 | 2 | 490 | 493 | 7 | 11 | 2 | 356 | 354 |
| 4 | 8 | 2 | 1350 | 1324 | 9 | 11 | 2 | 762 | 783 |
| 6 | 8 | 2 | 1093 | 1073 | 11 | 11 | 2 | 538 | 554 |
| 8 | 8 | 2 | 1065 | 1056 | 13 | 11 | 2 | 151 | 73 |
| 10 | 8 | 2 | 1017 | 1025 | −4 | 12 | 2 | 221 | 262 |
| 12 | 8 | 2 | 179 | 148 | 0 | 12 | 2 | 212 | 243 |
| 14 | 8 | 2 | 812 | 811 | 2 | 12 | 2 | 191 | 212 |
| 16 | 8 | 2 | 783 | 784 | 4 | 12 | 2 | 274 | 270 |
| 18 | 8 | 2 | 831 | 826 | 6 | 12 | 2 | 178 | 155 |
| 20 | 8 | 2 | 741 | 710 | 8 | 12 | 2 | 330 | 340 |
| −21 | 9 | 2 | 272 | 277 | 10 | 12 | 2 | 577 | 582 |

TABLE 1-continued

MO2CO2S4(CO)2(NCCH3)2[S2CH(C2H5)2]2

| H | K | L | FOBS | FCAL | H | K | L | FOBS | FCAL |
|---|---|---|---|---|---|---|---|---|---|
| −17 | 9 | 2 | 219 | 211 | 12 | 12 | 2 | 180 | 170 |
| −15 | 9 | 2 | 552 | 598 | −9 | 13 | 2 | 248 | 226 |
| −13 | 9 | 2 | 671 | 683 | −5 | 13 | 2 | 283 | 272 |
| −11 | 9 | 2 | 681 | 650 | −3 | 13 | 2 | 439 | 460 |
| −9 | 9 | 2 | 227 | 232 | −1 | 13 | 2 | 422 | 408 |
| −7 | 9 | 2 | 509 | 506 | 1 | 13 | 2 | 199 | 205 |
| −5 | 9 | 2 | 1138 | 1150 | 5 | 13 | 2 | 183 | 233 |
| −3 | 9 | 2 | 1134 | 1146 | 7 | 13 | 2 | 218 | 243 |
| −1 | 9 | 2 | 827 | 832 | −27 | 1 | 3 | 436 | 451 |
| 1 | 9 | 2 | 255 | 242 | −25 | 1 | 3 | 783 | 770 |
| 3 | 9 | 2 | 724 | 702 | −23 | 1 | 3 | 654 | 644 |
| 5 | 9 | 2 | 913 | 926 | −21 | 1 | 3 | 626 | 622 |
| 7 | 9 | 2 | 1121 | 1109 | −17 | 1 | 3 | 1004 | 1061 |
| 9 | 9 | 2 | 782 | 771 | −15 | 1 | 3 | 951 | 961 |
| 11 | 9 | 2 | 420 | 409 | −13 | 1 | 3 | 943 | 904 |
| 13 | 9 | 2 | 395 | 373 | −11 | 1 | 3 | 723 | 699 |
| 15 | 9 | 2 | 733 | 716 | −9 | 1 | 3 | 353 | 341 |
| 17 | 9 | 2 | 820 | 793 | −7 | 1 | 3 | 237 | 287 |
| 19 | 9 | 2 | 582 | 578 | −5 | 1 | 3 | 747 | 682 |
| −14 | 10 | 2 | 254 | 248 | −3 | 1 | 3 | 671 | 710 |
| −10 | 10 | 2 | 264 | 239 | −1 | 1 | 3 | 1082 | 1117 |
| −8 | 10 | 2 | 194 | 223 | 1 | 1 | 3 | 543 | 529 |
| −6 | 10 | 2 | 584 | 618 | 3 | 1 | 3 | 1887 | 1846 |
| −4 | 10 | 2 | 1085 | 1096 | 5 | 1 | 3 | 134 | 143 |
| −2 | 10 | 2 | 371 | 334 | 7 | 1 | 3 | 1258 | 1261 |
| 0 | 10 | 2 | 176 | 151 | 9 | 1 | 3 | 373 | 367 |
| 2 | 10 | 2 | 751 | 756 | 11 | 1 | 3 | 409 | 404 |
| 4 | 10 | 2 | 1594 | 1595 | 15 | 1 | 3 | 1038 | 1049 |
| 6 | 10 | 2 | 1032 | 1032 | 17 | 1 | 3 | 439 | 441 |
| 8 | 10 | 2 | 230 | 240 | 23 | 1 | 3 | 393 | 391 |
| 10 | 10 | 2 | 252 | 251 | 25 | 1 | 3 | 444 | 426 |
| 12 | 10 | 2 | 864 | 850 | −26 | 2 | 3 | 724 | 696 |
| 14 | 10 | 2 | 900 | 876 | −24 | 2 | 3 | 149 | 187 |
| 16 | 10 | 2 | 333 | 348 | −22 | 2 | 3 | 370 | 387 |
| −15 | 11 | 2 | 546 | 509 | −20 | 2 | 3 | 829 | 822 |
| −13 | 11 | 2 | 799 | 778 | −18 | 2 | 3 | 1804 | 1859 |
| −16 | 2 | 3 | 1418 | 1403 | 10 | 4 | 3 | 567 | 570 |
| −14 | 2 | 3 | 195 | 202 | 12 | 4 | 3 | 782 | 779 |
| −12 | 2 | 3 | 1050 | 1008 | 14 | 4 | 3 | 1446 | 1425 |
| −10 | 2 | 3 | 2267 | 2126 | 16 | 4 | 3 | 1572 | 1556 |
| −8 | 2 | 3 | 2458 | 2356 | 18 | 4 | 3 | 931 | 931 |
| −6 | 2 | 3 | 595 | 631 | 22 | 4 | 3 | 219 | 202 |
| −2 | 2 | 3 | 324 | 323 | 24 | 4 | 3 | 654 | 616 |
| 0 | 2 | 3 | 803 | 797 | −25 | 5 | 3 | 610 | 616 |
| 2 | 2 | 3 | 101 | 107 | −23 | 5 | 3 | 422 | 428 |
| 4 | 2 | 3 | 140 | 162 | −21 | 5 | 3 | 558 | 502 |
| 6 | 2 | 3 | 2646 | 2666 | −19 | 5 | 3 | 197 | 155 |
| 8 | 2 | 3 | 2329 | 2354 | −17 | 5 | 3 | 777 | 829 |
| 10 | 2 | 3 | 834 | 853 | −15 | 5 | 3 | 457 | 481 |
| 12 | 2 | 3 | 704 | 709 | −13 | 5 | 3 | 171 | 160 |

TABLE 1-continued

| | | | | | | | | | |
|---|---|---|---|---|---|---|---|---|---|
| MO2CO2S4(CO)2(NCCH3)2[S2CH(C2H5)2]2 | | | | | | | | | |
| H | K | L | FOBS | FCAL | H | K | L | FOBS | FCAL |
| 14 | 2 | 3 | 1288 | 1274 | −11 | 5 | 3 | 486 | 492 |
| 16 | 2 | 3 | 2250 | 2213 | −9 | 5 | 3 | 165 | 178 |
| 18 | 2 | 3 | 1159 | 1125 | −7 | 5 | 3 | 419 | 447 |
| 20 | 2 | 3 | 889 | 880 | −5 | 5 | 3 | 712 | 723 |
| 22 | 2 | 3 | 143 | 132 | −3 | 5 | 3 | 283 | 275 |
| 24 | 2 | 3 | 777 | 741 | −1 | 5 | 3 | 165 | 131 |
| −21 | 3 | 3 | 370 | 351 | 1 | 5 | 3 | 606 | 608 |
| −19 | 3 | 3 | 524 | 541 | 3 | 5 | 3 | 1573 | 1584 |
| −17 | 3 | 3 | 193 | 148 | 5 | 5 | 3 | 398 | 410 |
| −15 | 3 | 3 | 291 | 285 | 7 | 5 | 3 | 438 | 431 |
| −13 | 3 | 3 | 341 | 330 | 9 | 5 | 3 | 169 | 169 |
| −11 | 3 | 3 | 395 | 390 | 11 | 5 | 3 | 367 | 358 |
| −9 | 3 | 3 | 166 | 140 | 13 | 5 | 3 | 411 | 388 |
| −7 | 3 | 3 | 660 | 643 | 15 | 5 | 3 | 367 | 330 |
| −5 | 3 | 3 | 754 | 755 | 17 | 5 | 3 | 323 | 284 |
| −3 | 3 | 3 | 982 | 939 | 19 | 5 | 3 | 257 | 244 |
| 3 | 3 | 3 | 941 | 941 | 23 | 5 | 3 | 238 | 219 |
| 5 | 3 | 3 | 1319 | 1307 | −24 | 6 | 3 | 386 | 394 |
| 7 | 3 | 3 | 319 | 343 | −22 | 6 | 3 | 594 | 608 |
| 9 | 3 | 3 | 944 | 935 | −20 | 6 | 3 | 251 | 252 |
| 13 | 3 | 3 | 663 | 654 | −18 | 6 | 3 | 343 | 352 |
| 17 | 3 | 3 | 779 | 769 | −16 | 6 | 3 | 176 | 217 |
| 19 | 3 | 3 | 593 | 591 | −14 | 6 | 3 | 906 | 970 |
| 25 | 3 | 3 | 224 | 229 | −12 | 6 | 3 | 674 | 734 |
| −26 | 4 | 3 | 664 | 657 | −10 | 6 | 3 | 1084 | 1113 |
| −24 | 4 | 3 | 560 | 555 | −8 | 6 | 3 | 503 | 541 |
| −22 | 4 | 3 | 249 | 237 | −6 | 6 | 3 | 854 | 870 |
| −20 | 4 | 3 | 320 | 352 | −4 | 6 | 3 | 1210 | 1212 |
| −18 | 4 | 3 | 1169 | 1216 | −2 | 6 | 3 | 601 | 610 |
| −16 | 4 | 3 | 1515 | 1588 | 0 | 6 | 3 | 334 | 335 |
| −14 | 4 | 3 | 1252 | 1273 | 2 | 6 | 3 | 700 | 680 |
| −12 | 4 | 3 | 459 | 467 | 4 | 6 | 3 | 857 | 849 |
| −10 | 4 | 3 | 1066 | 1048 | 8 | 6 | 3 | 484 | 486 |
| −8 | 4 | 3 | 2465 | 2499 | 10 | 6 | 3 | 312 | 209 |
| −6 | 4 | 3 | 2067 | 2172 | 12 | 6 | 3 | 956 | 939 |
| −4 | 4 | 3 | 1435 | 1484 | 16 | 6 | 3 | 520 | 522 |
| −2 | 4 | 3 | 1332 | 1311 | 18 | 6 | 3 | 176 | 139 |
| 0 | 4 | 3 | 1023 | 1009 | 20 | 6 | 3 | 316 | 275 |
| 2 | 4 | 3 | 928 | 949 | 22 | 6 | 3 | 355 | 354 |
| 4 | 4 | 3 | 2318 | 2358 | −23 | 7 | 3 | 245 | 274 |
| 6 | 4 | 3 | 2262 | 2294 | −21 | 7 | 3 | 173 | 186 |
| 8 | 4 | 3 | 1473 | 1477 | −19 | 7 | 3 | 546 | 575 |
| −17 | 7 | 3 | 655 | 706 | 19 | 9 | 3 | 462 | 452 |
| −15 | 7 | 3 | 628 | 655 | −18 | 10 | 3 | 280 | 306 |
| −13 | 7 | 3 | 334 | 354 | −16 | 10 | 3 | 568 | 603 |
| −11 | 7 | 3 | 385 | 405 | −14 | 10 | 3 | 910 | 906 |
| −9 | 7 | 3 | 672 | 650 | −12 | 10 | 3 | 517 | 506 |
| −7 | 7 | 3 | 966 | 976 | −8 | 10 | 3 | 402 | 406 |
| −5 | 7 | 3 | 191 | 161 | −6 | 10 | 3 | 907 | 909 |
| −3 | 7 | 3 | 364 | 373 | −4 | 10 | 3 | 751 | 762 |

TABLE 1-continued

| MO2CO2S4(CO)2(NCCH3)2[S2CH(C2H5)2]2 | | | | | | | | | |
|---|---|---|---|---|---|---|---|---|---|
| H | K | L | FOBS | FCAL | H | K | L | FOBS | FCAL |
| −1 | 7 | 3 | 201 | 185 | −2 | 10 | 3 | 477 | 495 |
| 1 | 7 | 3 | 176 | 195 | 0 | 10 | 3 | 307 | 301 |
| 3 | 7 | 3 | 243 | 194 | 2 | 10 | 3 | 441 | 442 |
| 5 | 7 | 3 | 670 | 668 | 4 | 10 | 3 | 757 | 775 |
| 7 | 7 | 3 | 753 | 751 | 6 | 10 | 3 | 528 | 511 |
| 9 | 7 | 3 | 1097 | 1103 | 8 | 10 | 3 | 503 | 517 |
| 11 | 7 | 3 | 448 | 432 | 12 | 10 | 3 | 392 | 393 |
| 13 | 7 | 3 | 428 | 398 | 14 | 10 | 3 | 517 | 514 |
| 15 | 7 | 3 | 705 | 687 | 16 | 10 | 3 | 358 | 367 |
| 17 | 7 | 3 | 961 | 938 | −13 | 11 | 3 | 329 | 304 |
| 19 | 7 | 3 | 670 | 648 | −11 | 11 | 3 | 323 | 280 |
| −20 | 8 | 3 | 278 | 297 | −7 | 11 | 3 | 369 | 344 |
| −18 | 8 | 3 | 734 | 780 | −5 | 11 | 3 | 675 | 671 |
| −16 | 8 | 3 | 683 | 726 | −3 | 11 | 3 | 427 | 436 |
| −12 | 8 | 3 | 307 | 291 | 1 | 11 | 3 | 395 | 401 |
| −10 | 8 | 3 | 733 | 713 | 3 | 11 | 3 | 733 | 741 |
| −8 | 8 | 3 | 1142 | 1086 | 5 | 11 | 3 | 549 | 551 |
| −6 | 8 | 3 | 493 | 476 | 9 | 11 | 3 | 313 | 327 |
| −4 | 8 | 3 | 400 | 399 | 11 | 11 | 3 | 425 | 416 |
| −2 | 8 | 3 | 270 | 257 | 13 | 11 | 3 | 327 | 305 |
| 0 | 8 | 3 | 477 | 479 | −12 | 12 | 3 | 352 | 338 |
| 2 | 8 | 3 | 393 | 400 | −10 | 12 | 3 | 365 | 363 |
| 4 | 8 | 3 | 442 | 436 | −8 | 12 | 3 | 402 | 396 |
| 6 | 8 | 3 | 1097 | 1097 | −6 | 12 | 3 | 223 | 241 |
| 8 | 8 | 3 | 637 | 626 | −4 | 12 | 3 | 386 | 402 |
| 10 | 8 | 3 | 274 | 265 | −2 | 12 | 3 | 287 | 290 |
| 12 | 8 | 3 | 217 | 223 | 0 | 12 | 3 | 429 | 415 |
| 14 | 8 | 3 | 454 | 451 | 4 | 12 | 3 | 277 | 264 |
| 16 | 8 | 3 | 784 | 767 | −9 | 13 | 3 | 486 | 477 |
| 18 | 8 | 3 | 428 | 419 | −7 | 13 | 3 | 754 | 791 |
| −19 | 9 | 3 | 396 | 428 | −5 | 13 | 3 | 1027 | 1041 |
| −17 | 9 | 3 | 469 | 511 | −3 | 13 | 3 | 460 | 474 |
| −15 | 9 | 3 | 844 | 902 | 1 | 13 | 3 | 373 | 377 |
| −13 | 9 | 3 | 578 | 562 | 3 | 13 | 3 | 1004 | 1018 |
| −9 | 9 | 3 | 551 | 523 | 5 | 13 | 3 | 894 | 913 |
| −7 | 9 | 3 | 1508 | 1471 | 7 | 13 | 3 | 560 | 579 |
| −5 | 9 | 3 | 2289 | 2238 | −26 | 0 | 4 | 1011 | 1014 |
| −3 | 9 | 3 | 1079 | 1073 | −24 | 0 | 4 | 501 | 487 |
| −1 | 9 | 3 | 249 | 246 | −22 | 0 | 4 | 199 | 208 |
| 1 | 9 | 3 | 996 | 1002 | −20 | 0 | 4 | 362 | 359 |
| 3 | 9 | 3 | 2211 | 2186 | −18 | 0 | 4 | 1578 | 1665 |
| 5 | 9 | 3 | 1847 | 1850 | −16 | 0 | 4 | 837 | 831 |
| 7 | 9 | 3 | 983 | 966 | −14 | 0 | 4 | 526 | 503 |
| 9 | 9 | 3 | 353 | 327 | −12 | 0 | 4 | 244 | 191 |
| 11 | 9 | 3 | 641 | 646 | −10 | 0 | 4 | 1393 | 1314 |
| 13 | 9 | 3 | 1146 | 1118 | −8 | 0 | 4 | 2112 | 1974 |
| 15 | 9 | 3 | 721 | 723 | −6 | 0 | 4 | 287 | 285 |
| 17 | 9 | 3 | 595 | 589 | −4 | 0 | 4 | 1728 | 1677 |
| −2 | 0 | 4 | 1710 | 1730 | 16 | 2 | 4 | 336 | 365 |
| 0 | 0 | 4 | 3242 | 3238 | 18 | 2 | 4 | 207 | 203 |

# TABLE 1-continued

MO2CO2S4(CO)2(NCCH3)2[S2CH(C2H5)2]2

| H | K | L | FOBS | FCAL | H | K | L | FOBS | FCAL |
|---|---|---|---|---|---|---|---|---|---|
| 2 | 0 | 4 | 2649 | 2604 | 22 | 2 | 4 | 271 | 273 |
| 4 | 0 | 4 | 1046 | 1052 | 24 | 2 | 4 | 233 | 244 |
| 6 | 0 | 4 | 311 | 297 | −25 | 3 | 4 | 570 | 550 |
| 8 | 0 | 4 | 1879 | 1874 | −23 | 3 | 4 | 240 | 223 |
| 10 | 0 | 4 | 2235 | 2295 | −21 | 3 | 4 | 782 | 796 |
| 12 | 0 | 4 | 1325 | 1341 | −19 | 3 | 4 | 1786 | 1827 |
| 14 | 0 | 4 | 1326 | 1345 | −17 | 3 | 4 | 1763 | 1855 |
| 16 | 0 | 4 | 554 | 565 | −15 | 3 | 4 | 684 | 660 |
| 18 | 0 | 4 | 1028 | 1038 | −11 | 3 | 4 | 1314 | 1275 |
| 20 | 0 | 4 | 886 | 879 | −9 | 3 | 4 | 2478 | 2459 |
| 22 | 0 | 4 | 482 | 491 | −7 | 3 | 4 | 1847 | 1906 |
| 24 | 0 | 4 | 426 | 419 | −5 | 3 | 4 | 1948 | 2045 |
| −27 | 1 | 4 | 654 | 644 | −3 | 3 | 4 | 2037 | 2003 |
| −25 | 1 | 4 | 214 | 235 | −1 | 3 | 4 | 400 | 405 |
| −23 | 1 | 4 | 239 | 232 | 1 | 3 | 4 | 1837 | 1802 |
| −21 | 1 | 4 | 571 | 570 | 3 | 3 | 4 | 2064 | 2121 |
| −19 | 1 | 4 | 1249 | 1277 | 5 | 3 | 4 | 2581 | 2600 |
| −17 | 1 | 4 | 1156 | 1214 | 7 | 3 | 4 | 2173 | 2211 |
| −13 | 1 | 4 | 241 | 258 | 9 | 3 | 4 | 248 | 108 |
| −11 | 1 | 4 | 823 | 779 | 11 | 3 | 4 | 388 | 387 |
| −9 | 1 | 4 | 1926 | 1835 | 13 | 3 | 4 | 1358 | 1363 |
| −7 | 1 | 4 | 1006 | 1024 | 15 | 3 | 4 | 1596 | 1596 |
| −5 | 1 | 4 | 1002 | 994 | 17 | 3 | 4 | 567 | 580 |
| −3 | 1 | 4 | 556 | 555 | 19 | 3 | 4 | 316 | 313 |
| −1 | 1 | 4 | 903 | 884 | 23 | 3 | 4 | 422 | 420 |
| 1 | 1 | 4 | 849 | 814 | −26 | 4 | 4 | 365 | 376 |
| 3 | 1 | 4 | 960 | 936 | −22 | 4 | 4 | 351 | 353 |
| 5 | 1 | 4 | 3286 | 3229 | −20 | 4 | 4 | 162 | 143 |
| 7 | 1 | 4 | 1171 | 1207 | −18 | 4 | 4 | 409 | 422 |
| 9 | 1 | 4 | 171 | 176 | −16 | 4 | 4 | 246 | 251 |
| 11 | 1 | 4 | 219 | 200 | −14 | 4 | 4 | 389 | 357 |
| 13 | 1 | 4 | 807 | 816 | −12 | 4 | 4 | 265 | 235 |
| 15 | 1 | 4 | 1096 | 1083 | −10 | 4 | 4 | 159 | 121 |
| 17 | 1 | 4 | 447 | 442 | −8 | 4 | 4 | 207 | 196 |
| 19 | 1 | 4 | 347 | 344 | −6 | 4 | 4 | 1067 | 1113 |
| 23 | 1 | 4 | 241 | 236 | −4 | 4 | 4 | 674 | 663 |
| 25 | 1 | 4 | 301 | 311 | −2 | 4 | 4 | 204 | 206 |
| −26 | 2 | 4 | 361 | 370 | 0 | 4 | 4 | 415 | 410 |
| −24 | 2 | 4 | 241 | 229 | 2 | 4 | 4 | 317 | 318 |
| −20 | 2 | 4 | 490 | 504 | 4 | 4 | 4 | 345 | 348 |
| −18 | 2 | 4 | 665 | 693 | 6 | 4 | 4 | 124 | 154 |
| −16 | 2 | 4 | 517 | 536 | 8 | 4 | 4 | 1695 | 1706 |
| −10 | 2 | 4 | 1005 | 942 | 10 | 4 | 4 | 1052 | 1086 |
| −8 | 2 | 4 | 608 | 582 | 12 | 4 | 4 | 185 | 151 |
| −6 | 2 | 4 | 444 | 450 | 16 | 4 | 4 | 827 | 808 |
| −4 | 2 | 4 | 370 | 363 | 18 | 4 | 4 | 1036 | 1004 |
| −2 | 2 | 4 | 315 | 294 | 20 | 4 | 4 | 359 | 356 |
| 2 | 2 | 4 | 746 | 736 | −25 | 5 | 4 | 539 | 527 |
| 4 | 2 | 4 | 924 | 933 | −23 | 5 | 4 | 457 | 475 |
| 6 | 2 | 4 | 616 | 649 | −19 | 5 | 4 | 495 | 504 |

TABLE I-continued

| MO2CO2S4(CO)2(NCCH3)2[S2CH(C2H5)2]2 | | | | | | | | | |
|---|---|---|---|---|---|---|---|---|---|
| H | K | L | FOBS | FCAL | H | K | L | FOBS | FCAL |
| 8 | 2 | 4 | 252 | 265 | −17 | 5 | 4 | 902 | 944 |
| 10 | 2 | 4 | 671 | 659 | −15 | 5 | 4 | 1028 | 1106 |
| 12 | 2 | 4 | 547 | 534 | −13 | 5 | 4 | 467 | 501 |
| 14 | 2 | 4 | 388 | 383 | −11 | 5 | 4 | 251 | 197 |
| −9 | 5 | 4 | 1155 | 1175 | −20 | 8 | 4 | 564 | 592 |
| −7 | 5 | 4 | 1582 | 1654 | −18 | 8 | 4 | 672 | 715 |
| −5 | 5 | 4 | 1485 | 1518 | −16 | 8 | 4 | 805 | 845 |
| −3 | 5 | 4 | 275 | 262 | −14 | 8 | 4 | 548 | 588 |
| −1 | 5 | 4 | 756 | 769 | −12 | 8 | 4 | 274 | 295 |
| 1 | 5 | 4 | 1040 | 1061 | −10 | 8 | 4 | 639 | 631 |
| 3 | 5 | 4 | 2138 | 2161 | −8 | 8 | 4 | 1300 | 1260 |
| 5 | 5 | 4 | 653 | 633 | −6 | 8 | 4 | 1614 | 1577 |
| 7 | 5 | 4 | 216 | 199 | −4 | 8 | 4 | 1078 | 1048 |
| 9 | 5 | 4 | 753 | 781 | −2 | 8 | 4 | 134 | 59 |
| 11 | 5 | 4 | 1237 | 1196 | 0 | 8 | 4 | 291 | 290 |
| 13 | 5 | 4 | 718 | 710 | 2 | 8 | 4 | 1247 | 1232 |
| 15 | 5 | 4 | 401 | 383 | 4 | 8 | 4 | 1430 | 1423 |
| 19 | 5 | 4 | 349 | 333 | 6 | 8 | 4 | 946 | 944 |
| 21 | 5 | 4 | 392 | 363 | 8 | 8 | 4 | 905 | 899 |
| 23 | 5 | 4 | 300 | 309 | 10 | 8 | 4 | 159 | 60 |
| −24 | 6 | 4 | 234 | 243 | 12 | 8 | 4 | 639 | 625 |
| −20 | 6 | 4 | 545 | 570 | 14 | 8 | 4 | 815 | 804 |
| −18 | 6 | 4 | 683 | 715 | 16 | 8 | 4 | 808 | 808 |
| −16 | 6 | 4 | 429 | 472 | 18 | 8 | 4 | 778 | 754 |
| −14 | 6 | 4 | 188 | 210 | −19 | 9 | 4 | 637 | 698 |
| −12 | 6 | 4 | 191 | 178 | −17 | 9 | 4 | 899 | 958 |
| −10 | 6 | 4 | 840 | 873 | −15 | 9 | 4 | 728 | 782 |
| −8 | 6 | 4 | 289 | 295 | −13 | 9 | 4 | 235 | 242 |
| −4 | 6 | 4 | 176 | 131 | −11 | 9 | 4 | 564 | 555 |
| 0 | 6 | 4 | 586 | 589 | −9 | 9 | 4 | 1310 | 1260 |
| 2 | 6 | 4 | 487 | 484 | −7 | 9 | 4 | 1143 | 1113 |
| 4 | 6 | 4 | 454 | 446 | −5 | 9 | 4 | 1011 | 992 |
| 6 | 6 | 4 | 478 | 467 | −3 | 9 | 4 | 289 | 309 |
| 8 | 6 | 4 | 168 | 119 | −1 | 9 | 4 | 537 | 516 |
| 10 | 6 | 4 | 706 | 701 | 1 | 9 | 4 | 1152 | 1148 |
| 12 | 6 | 4 | 569 | 552 | 3 | 9 | 4 | 1159 | 1170 |
| 14 | 6 | 4 | 594 | 574 | 5 | 9 | 4 | 940 | 935 |
| 16 | 6 | 4 | 392 | 376 | 9 | 9 | 4 | 458 | 446 |
| 18 | 6 | 4 | 302 | 315 | 11 | 9 | 4 | 773 | 777 |
| 22 | 6 | 4 | 367 | 344 | 13 | 9 | 4 | 527 | 535 |
| −23 | 7 | 4 | 242 | 234 | 15 | 9 | 4 | 285 | 276 |
| −21 | 7 | 4 | 350 | 371 | −16 | 10 | 4 | 610 | 608 |
| −19 | 7 | 4 | 863 | 907 | −14 | 10 | 4 | 728 | 713 |
| −17 | 7 | 4 | 648 | 701 | −10 | 10 | 4 | 267 | 236 |
| −13 | 7 | 4 | 306 | 312 | −8 | 10 | 4 | 820 | 810 |
| −11 | 7 | 4 | 531 | 466 | −6 | 10 | 4 | 1391 | 1367 |
| −9 | 7 | 4 | 1086 | 1044 | −4 | 10 | 4 | 732 | 725 |
| −7 | 7 | 4 | 628 | 641 | −2 | 10 | 4 | 221 | 248 |
| −5 | 7 | 4 | 355 | 348 | 0 | 10 | 4 | 188 | 174 |
| −3 | 7 | 4 | 797 | 796 | 2 | 10 | 4 | 1043 | 1045 |

TABLE 1-continued

MO2CO2S4(CO)2(NCCH3)2[S2CH(C2H5)2]2

| H | K | L | FOBS | FCAL | H | K | L | FOBS | FCAL |
|---|---|---|---|---|---|---|---|---|---|
| −1 | 7 | 4 | 276 | 282 | 4 | 10 | 4 | 917 | 932 |
| 1 | 7 | 4 | 339 | 323 | 6 | 10 | 4 | 565 | 561 |
| 3 | 7 | 4 | 643 | 647 | 8 | 10 | 4 | 358 | 338 |
| 5 | 7 | 4 | 1011 | 1018 | 12 | 10 | 4 | 432 | 450 |
| 7 | 7 | 4 | 924 | 924 | 14 | 10 | 4 | 312 | 299 |
| 11 | 7 | 4 | 169 | 167 | 16 | 10 | 4 | 324 | 298 |
| 13 | 7 | 4 | 239 | 212 | −15 | 11 | 4 | 419 | 426 |
| 15 | 7 | 4 | 539 | 518 | −7 | 11 | 4 | 474 | 471 |
| 21 | 7 | 4 | 412 | 380 | −5 | 11 | 4 | 319 | 321 |
| −22 | 8 | 4 | 222 | 253 | −3 | 11 | 4 | 254 | 243 |
| −1 | 11 | 4 | 198 | 199 | 12 | 2 | 5 | 592 | 593 |
| 1 | 11 | 4 | 354 | 347 | 14 | 2 | 5 | 845 | 816 |
| 3 | 11 | 4 | 379 | 384 | 16 | 2 | 5 | 412 | 425 |
| 7 | 11 | 4 | 145 | 132 | 18 | 2 | 5 | 239 | 231 |
| 11 | 11 | 4 | 317 | 337 | 20 | 2 | 5 | 405 | 389 |
| 13 | 11 | 4 | 387 | 382 | 24 | 2 | 5 | 332 | 329 |
| −12 | 12 | 4 | 285 | 280 | −23 | 3 | 5 | 235 | 206 |
| −10 | 12 | 4 | 411 | 424 | −21 | 3 | 5 | 363 | 359 |
| −8 | 12 | 4 | 377 | 403 | −17 | 3 | 5 | 468 | 499 |
| −6 | 12 | 4 | 336 | 343 | −15 | 3 | 5 | 361 | 373 |
| 0 | 12 | 4 | 157 | 146 | −13 | 3 | 5 | 228 | 197 |
| 2 | 12 | 4 | 342 | 356 | −11 | 3 | 5 | 460 | 420 |
| 4 | 12 | 4 | 361 | 357 | −9 | 3 | 5 | 250 | 241 |
| 6 | 12 | 4 | 255 | 282 | −7 | 3 | 5 | 487 | 518 |
| 3 | 13 | 4 | 239 | 241 | −5 | 3 | 5 | 663 | 660 |
| −27 | 1 | 5 | 458 | 443 | −3 | 3 | 5 | 299 | 309 |
| −23 | 1 | 5 | 145 | 66 | −1 | 3 | 5 | 1054 | 1068 |
| −21 | 1 | 5 | 163 | 180 | 1 | 3 | 5 | 158 | 159 |
| −19 | 1 | 5 | 839 | 843 | 3 | 3 | 5 | 579 | 586 |
| −17 | 1 | 5 | 341 | 357 | 5 | 3 | 5 | 972 | 969 |
| −13 | 1 | 5 | 178 | 163 | 7 | 3 | 5 | 1186 | 1206 |
| −11 | 1 | 5 | 919 | 880 | 9 | 3 | 5 | 660 | 690 |
| −9 | 1 | 5 | 1814 | 1734 | 13 | 3 | 5 | 560 | 562 |
| −7 | 1 | 5 | 1547 | 1517 | 15 | 3 | 5 | 693 | 685 |
| −5 | 1 | 5 | 527 | 554 | 17 | 3 | 5 | 520 | 498 |
| −3 | 1 | 5 | 419 | 396 | 19 | 3 | 5 | 154 | 146 |
| −1 | 1 | 5 | 3525 | 3398 | 21 | 3 | 5 | 296 | 283 |
| 1 | 1 | 5 | 3236 | 3142 | −26 | 4 | 5 | 543 | 544 |
| 3 | 1 | 5 | 1492 | 1488 | −22 | 4 | 5 | 375 | 379 |
| 5 | 1 | 5 | 296 | 300 | −20 | 4 | 5 | 986 | 1015 |
| 7 | 1 | 5 | 2297 | 2323 | −18 | 4 | 5 | 1429 | 1508 |
| 9 | 1 | 5 | 2544 | 2617 | −16 | 4 | 5 | 937 | 989 |
| 11 | 1 | 5 | 1554 | 1575 | −14 | 4 | 5 | 653 | 671 |
| 13 | 1 | 5 | 766 | 761 | −12 | 4 | 5 | 413 | 421 |
| 15 | 1 | 5 | 332 | 313 | −10 | 4 | 5 | 1771 | 1790 |
| 17 | 1 | 5 | 910 | 913 | −8 | 4 | 5 | 2645 | 2713 |
| 19 | 1 | 5 | 700 | 691 | −6 | 4 | 5 | 2404 | 2468 |
| 21 | 1 | 5 | 439 | 419 | −4 | 4 | 5 | 1272 | 1300 |
| 23 | 1 | 5 | 446 | 458 | −2 | 4 | 5 | 1264 | 1274 |
| −26 | 2 | 5 | 245 | 239 | 0 | 4 | 5 | 2838 | 2911 |

## TABLE 1-continued

| MO2CO2S4(CO)2(NCCH3)2[S2CH(C2H5)2]2 | | | | | | | | | |
|---|---|---|---|---|---|---|---|---|---|
| H | K | L | FOBS | FCAL | H | K | L | FOBS | FCAL |
| −24 | 2 | 5 | 233 | 241 | 2 | 4 | 5 | 2500 | 2535 |
| −22 | 2 | 5 | 221 | 201 | 4 | 4 | 5 | 1859 | 1911 |
| −20 | 2 | 5 | 1045 | 1053 | 6 | 4 | 5 | 369 | 360 |
| −18 | 2 | 5 | 1178 | 1191 | 8 | 4 | 5 | 1328 | 1349 |
| −16 | 2 | 5 | 628 | 645 | 10 | 4 | 5 | 1213 | 1244 |
| −14 | 2 | 5 | 885 | 860 | 12 | 4 | 5 | 1001 | 975 |
| −12 | 2 | 5 | 323 | 314 | 14 | 4 | 5 | 603 | 591 |
| −10 | 2 | 5 | 1435 | 1424 | 18 | 4 | 5 | 226 | 195 |
| −8 | 2 | 5 | 2004 | 1967 | 20 | 4 | 5 | 254 | 242 |
| −6 | 2 | 5 | 2069 | 2103 | 22 | 4 | 5 | 315 | 326 |
| −4 | 2 | 5 | 2840 | 2720 | −19 | 5 | 5 | 329 | 364 |
| −2 | 2 | 5 | 1091 | 1031 | −15 | 5 | 5 | 261 | 277 |
| 0 | 2 | 5 | 1759 | 1725 | −11 | 5 | 5 | 854 | 892 |
| 2 | 2 | 5 | 1698 | 1729 | −9 | 5 | 5 | 1115 | 1162 |
| 4 | 2 | 5 | 2610 | 2654 | −3 | 5 | 5 | 753 | 771 |
| 6 | 2 | 5 | 1645 | 1695 | −1 | 5 | 5 | 2333 | 2366 |
| 1 | 5 | 5 | 1869 | 1902 | −6 | 8 | 5 | 1322 | 1299 |
| 3 | 5 | 5 | 611 | 595 | −4 | 8 | 5 | 1082 | 1060 |
| 7 | 5 | 5 | 2012 | 2032 | 0 | 8 | 5 | 1018 | 1018 |
| 9 | 5 | 5 | 2045 | 2065 | 2 | 8 | 5 | 1002 | 979 |
| 11 | 5 | 5 | 1073 | 1074 | 4 | 8 | 5 | 979 | 977 |
| 13 | 5 | 5 | 466 | 440 | 6 | 8 | 5 | 233 | 232 |
| 15 | 5 | 5 | 351 | 354 | 8 | 8 | 5 | 435 | 432 |
| 17 | 5 | 5 | 1009 | 991 | 10 | 8 | 5 | 308 | 326 |
| 19 | 5 | 5 | 471 | 438 | 16 | 8 | 5 | 212 | 262 |
| 21 | 5 | 5 | 348 | 336 | −19 | 9 | 5 | 594 | 609 |
| −24 | 6 | 5 | 252 | 236 | −17 | 9 | 5 | 897 | 946 |
| −16 | 6 | 5 | 484 | 505 | −15 | 9 | 5 | 844 | 854 |
| −12 | 6 | 5 | 597 | 598 | −13 | 9 | 5 | 348 | 293 |
| −10 | 6 | 5 | 541 | 566 | −11 | 9 | 5 | 503 | 775 |
| −8 | 6 | 5 | 196 | 217 | −9 | 9 | 5 | 1026 | 986 |
| −4 | 6 | 5 | 1538 | 1591 | −7 | 9 | 5 | 1554 | 1503 |
| −2 | 6 | 5 | 908 | 927 | −5 | 9 | 5 | 561 | 549 |
| 0 | 6 | 5 | 734 | 745 | −3 | 9 | 5 | 224 | 170 |
| 2 | 6 | 5 | 587 | 589 | 1 | 9 | 5 | 778 | 781 |
| 4 | 6 | 5 | 341 | 372 | 3 | 9 | 5 | 1102 | 1076 |
| 6 | 6 | 5 | 936 | 947 | 5 | 9 | 5 | 709 | 696 |
| 8 | 6 | 5 | 635 | 626 | 7 | 9 | 5 | 659 | 643 |
| 10 | 6 | 5 | 981 | 969 | 9 | 9 | 5 | 306 | 297 |
| 12 | 6 | 5 | 667 | 654 | 11 | 9 | 5 | 607 | 606 |
| 16 | 6 | 5 | 168 | 169 | 13 | 9 | 5 | 535 | 513 |
| 18 | 6 | 5 | 437 | 439 | 15 | 9 | 5 | 488 | 476 |
| 20 | 6 | 5 | 640 | 621 | 17 | 9 | 5 | 407 | 401 |
| 22 | 6 | 5 | 298 | 296 | −18 | 10 | 5 | 491 | 509 |
| −23 | 7 | 5 | 256 | 268 | −16 | 10 | 5 | 630 | 654 |
| −21 | 7 | 5 | 491 | 524 | −12 | 10 | 5 | 569 | 559 |
| −19 | 7 | 5 | 689 | 713 | −10 | 10 | 5 | 740 | 715 |
| −17 | 7 | 5 | 489 | 499 | −8 | 10 | 5 | 1078 | 1057 |
| −15 | 7 | 5 | 260 | 243 | −6 | 10 | 5 | 915 | 901 |
| −13 | 7 | 5 | 284 | 288 | −4 | 10 | 5 | 216 | 233 |

TABLE 1-continued

| | | | | | | | | | |
|---|---|---|---|---|---|---|---|---|---|
| MO2CO2S4(CO)2(NCCH3)2[S2CH(C2H5)2]2 | | | | | | | | | |
| H | K | L | FOBS | FCAL | H | K | L | FOBS | FCAL |
| −11 | 7 | 5 | 648 | 656 | −2 | 10 | 5 | 898 | 901 |
| −9 | 7 | 5 | 924 | 873 | 0 | 10 | 5 | 1174 | 1179 |
| −7 | 7 | 5 | 1244 | 1174 | 2 | 10 | 5 | 1215 | 1219 |
| −5 | 7 | 5 | 829 | 849 | 4 | 10 | 5 | 469 | 467 |
| −3 | 7 | 5 | 297 | 324 | 6 | 10 | 5 | 347 | 334 |
| −1 | 7 | 5 | 826 | 820 | 8 | 10 | 5 | 717 | 720 |
| 1 | 7 | 5 | 1240 | 1242 | 10 | 10 | 5 | 934 | 944 |
| 3 | 7 | 5 | 1159 | 1173 | 12 | 10 | 5 | 756 | 744 |
| 5 | 7 | 5 | 614 | 609 | 14 | 10 | 5 | 193 | 209 |
| 9 | 7 | 5 | 657 | 640 | −11 | 11 | 5 | 243 | 212 |
| 11 | 7 | 5 | 740 | 704 | −3 | 11 | 5 | 196 | 189 |
| 13 | 7 | 5 | 767 | 752 | −1 | 11 | 5 | 330 | 333 |
| 15 | 7 | 5 | 453 | 446 | 1 | 11 | 5 | 228 | 243 |
| 17 | 7 | 5 | 195 | 164 | 3 | 11 | 5 | 142 | 194 |
| 19 | 7 | 5 | 201 | 214 | 7 | 11 | 5 | 303 | 304 |
| −20 | 8 | 5 | 383 | 389 | 9 | 11 | 5 | 370 | 356 |
| −18 | 8 | 5 | 755 | 808 | 11 | 11 | 5 | 176 | 186 |
| −16 | 8 | 5 | 613 | 643 | −12 | 12 | 5 | 373 | 364 |
| −14 | 8 | 5 | 705 | 731 | −8 | 12 | 5 | 163 | 148 |
| −12 | 8 | 5 | 196 | 161 | −6 | 12 | 5 | 200 | 186 |
| −10 | 8 | 5 | 1089 | 1061 | −4 | 12 | 5 | 401 | 399 |
| −8 | 8 | 5 | 1104 | 1058 | −2 | 12 | 5 | 224 | 201 |
| 0 | 12 | 5 | 187 | 171 | −16 | 2 | 6 | 153 | 145 |
| 2 | 12 | 5 | 317 | 330 | −12 | 2 | 6 | 900 | 871 |
| 10 | 12 | 5 | 419 | 404 | −10 | 2 | 6 | 1028 | 1025 |
| −7 | 13 | 5 | 1063 | 1074 | −8 | 2 | 6 | 871 | 859 |
| −5 | 13 | 5 | 518 | 518 | −6 | 2 | 6 | 553 | 534 |
| −1 | 13 | 5 | 436 | 458 | −4 | 2 | 6 | 557 | 551 |
| 1 | 13 | 5 | 803 | 801 | −2 | 2 | 6 | 1821 | 1856 |
| 3 | 13 | 5 | 770 | 783 | 0 | 2 | 6 | 1414 | 1459 |
| −26 | 0 | 6 | 168 | 159 | 2 | 2 | 6 | 696 | 714 |
| −22 | 0 | 6 | 259 | 264 | 4 | 2 | 6 | 205 | 201 |
| −20 | 0 | 6 | 1055 | 1068 | 6 | 2 | 6 | 559 | 583 |
| −18 | 0 | 6 | 651 | 649 | 8 | 2 | 6 | 729 | 767 |
| −14 | 0 | 6 | 481 | 480 | 10 | 2 | 6 | 1059 | 1096 |
| −12 | 0 | 6 | 1858 | 1781 | 12 | 2 | 6 | 672 | 669 |
| −10 | 0 | 6 | 4346 | 4129 | 14 | 2 | 6 | 409 | 399 |
| −8 | 0 | 6 | 1990 | 1879 | 16 | 2 | 6 | 285 | 265 |
| −6 | 0 | 6 | 226 | 153 | 18 | 2 | 6 | 366 | 359 |
| −4 | 0 | 6 | 1950 | 1962 | 20 | 2 | 6 | 532 | 525 |
| −2 | 0 | 6 | 6397 | 6139 | 22 | 2 | 6 | 394 | 382 |
| 0 | 0 | 6 | 4640 | 4799 | −23 | 3 | 6 | 149 | 150 |
| 2 | 0 | 6 | 2292 | 2342 | −21 | 3 | 6 | 523 | 533 |
| 4 | 0 | 6 | 392 | 406 | −19 | 3 | 6 | 1146 | 1181 |
| 6 | 0 | 6 | 3260 | 3334 | −17 | 3 | 6 | 939 | 974 |
| 8 | 0 | 6 | 4099 | 4236 | −15 | 3 | 6 | 1144 | 1207 |
| 10 | 0 | 6 | 2108 | 2128 | −13 | 3 | 6 | 760 | 762 |
| 12 | 0 | 6 | 1057 | 1071 | −11 | 3 | 6 | 1444 | 1455 |
| 16 | 0 | 6 | 1002 | 1001 | −9 | 3 | 6 | 2482 | 2526 |
| 18 | 0 | 6 | 1154 | 1142 | −7 | 3 | 6 | 1843 | 1928 |

## TABLE 1-continued

| MO2CO2S4(CO)2(NCCH3)2[S2CH(C2H5)2]2 | | | | | | | | | |
|---|---|---|---|---|---|---|---|---|---|
| H | K | L | FOBS | FCAL | H | K | L | FOBS | FCAL |
| 20 | 0 | 6 | 714 | 704 | −5 | 3 | 6 | 2160 | 2210 |
| 22 | 0 | 6 | 890 | 877 | −3 | 3 | 6 | 339 | 352 |
| 24 | 0 | 6 | 174 | 154 | −1 | 3 | 6 | 1821 | 1868 |
| −21 | 1 | 6 | 214 | 225 | 1 | 3 | 6 | 1703 | 1736 |
| −19 | 1 | 6 | 545 | 531 | 3 | 3 | 6 | 1697 | 1729 |
| −17 | 1 | 6 | 622 | 654 | 5 | 3 | 6 | 607 | 619 |
| −15 | 1 | 6 | 711 | 696 | 7 | 3 | 6 | 794 | 301 |
| −13 | 1 | 6 | 660 | 634 | 9 | 3 | 6 | 678 | 663 |
| −11 | 1 | 6 | 932 | 903 | 11 | 3 | 6 | 301 | 279 |
| −9 | 1 | 6 | 1305 | 1314 | 13 | 3 | 6 | 539 | 538 |
| −7 | 1 | 6 | 1188 | 1178 | 17 | 3 | 6 | 248 | 244 |
| −5 | 1 | 6 | 1548 | 1549 | 21 | 3 | 6 | 358 | 350 |
| −3 | 1 | 6 | 250 | 235 | 23 | 3 | 6 | 321 | 331 |
| −1 | 1 | 6 | 1990 | 2006 | −22 | 4 | 6 | 285 | 201 |
| 3 | 1 | 6 | 879 | 904 | −12 | 4 | 6 | 715 | 716 |
| 5 | 1 | 6 | 525 | 552 | −10 | 4 | 6 | 1609 | 1648 |
| 7 | 1 | 6 | 178 | 203 | −8 | 4 | 6 | 231 | 272 |
| 9 | 1 | 6 | 223 | 243 | −4 | 4 | 6 | 958 | 994 |
| 11 | 1 | 6 | 175 | 154 | −2 | 4 | 6 | 3027 | 3066 |
| 13 | 1 | 6 | 485 | 471 | 0 | 4 | 6 | 2054 | 2118 |
| 15 | 1 | 6 | 220 | 227 | 4 | 4 | 6 | 591 | 594 |
| 17 | 1 | 6 | 212 | 180 | 6 | 4 | 6 | 1629 | 1663 |
| 21 | 1 | 6 | 297 | 294 | 8 | 4 | 6 | 1830 | 1873 |
| 23 | 1 | 6 | 212 | 179 | 10 | 4 | 6 | 747 | 747 |
| −24 | 2 | 6 | 164 | 124 | 16 | 4 | 6 | 669 | 652 |
| −22 | 2 | 6 | 177 | 175 | 18 | 4 | 6 | 398 | 390 |
| −20 | 2 | 6 | 287 | 293 | 22 | 4 | 6 | 316 | 305 |
| −18 | 2 | 6 | 423 | 412 | −23 | 5 | 6 | 245 | 261 |
| −21 | 5 | 6 | 488 | 487 | 11 | 7 | 6 | 709 | 713 |
| −19 | 5 | 6 | 604 | 644 | 13 | 7 | 6 | 224 | 205 |
| −17 | 5 | 6 | 695 | 728 | 15 | 7 | 6 | 193 | 177 |
| −15 | 5 | 6 | 198 | 184 | 19 | 7 | 6 | 400 | 383 |
| −13 | 5 | 6 | 951 | 999 | −20 | 8 | 6 | 396 | 426 |
| −11 | 5 | 6 | 1261 | 1283 | −18 | 8 | 6 | 553 | 588 |
| −9 | 5 | 6 | 1355 | 1423 | −16 | 8 | 6 | 683 | 685 |
| −7 | 5 | 6 | 1132 | 1157 | −14 | 8 | 6 | 307 | 292 |
| −5 | 5 | 6 | 329 | 336 | −12 | 8 | 6 | 353 | 364 |
| −3 | 5 | 6 | 1642 | 1671 | −10 | 8 | 6 | 563 | 545 |
| −1 | 5 | 6 | 1763 | 1802 | −8 | 8 | 6 | 1161 | 1114 |
| 1 | 5 | 6 | 1946 | 1959 | −6 | 8 | 6 | 828 | 798 |
| 3 | 5 | 6 | 619 | 604 | −4 | 8 | 6 | 278 | 272 |
| 5 | 5 | 6 | 585 | 567 | 0 | 8 | 6 | 686 | 683 |
| 7 | 5 | 6 | 1158 | 1171 | 2 | 8 | 6 | 1366 | 1346 |
| 9 | 5 | 6 | 1337 | 1338 | 4 | 8 | 6 | 682 | 679 |
| 11 | 5 | 6 | 1171 | 1158 | 6 | 8 | 6 | 464 | 440 |
| 13 | 5 | 6 | 302 | 301 | 10 | 8 | 6 | 716 | 727 |
| 15 | 5 | 6 | 269 | 271 | 12 | 8 | 6 | 791 | 791 |
| 17 | 5 | 6 | 478 | 489 | 14 | 8 | 6 | 317 | 319 |
| 19 | 5 | 6 | 639 | 631 | 16 | 8 | 6 | 171 | 156 |
| 21 | 5 | 6 | 406 | 399 | 18 | 8 | 6 | 330 | 322 |

## TABLE 1-continued

MO2CO2S4(CO)2(NCCH3)2[S2CH(C2H5)2]2

| H | K | L | FOBS | FCAL | H | K | L | FOBS | FCAL |
|---|---|---|---|---|---|---|---|---|---|
| −24 | 6 | 6 | 192 | 140 | −19 | 9 | 6 | 522 | 549 |
| −20 | 6 | 6 | 446 | 475 | −17 | 9 | 6 | 695 | 707 |
| −18 | 6 | 6 | 326 | 336 | −15 | 9 | 6 | 458 | 444 |
| −14 | 6 | 6 | 176 | 128 | −13 | 9 | 6 | 319 | 267 |
| −12 | 6 | 6 | 967 | 971 | −11 | 9 | 6 | 907 | 883 |
| −10 | 6 | 6 | 1438 | 1419 | −9 | 9 | 6 | 1309 | 1263 |
| −8 | 6 | 6 | 1313 | 1355 | −7 | 9 | 6 | 1238 | 1206 |
| −6 | 6 | 6 | 609 | 622 | −3 | 9 | 6 | 919 | 899 |
| −4 | 6 | 6 | 808 | 805 | −1 | 9 | 6 | 1391 | 1386 |
| −2 | 6 | 6 | 2133 | 2161 | 1 | 9 | 6 | 1101 | 1119 |
| 0 | 6 | 6 | 2171 | 2178 | 3 | 9 | 6 | 508 | 498 |
| 2 | 6 | 6 | 1475 | 1503 | 5 | 9 | 6 | 373 | 376 |
| 4 | 6 | 6 | 481 | 478 | 7 | 9 | 6 | 860 | 848 |
| 6 | 6 | 6 | 1052 | 1051 | 9 | 9 | 6 | 764 | 760 |
| 8 | 6 | 6 | 1630 | 1612 | 11 | 9 | 6 | 478 | 478 |
| 10 | 6 | 6 | 1414 | 1395 | 13 | 9 | 6 | 168 | 157 |
| 12 | 6 | 6 | 1020 | 1005 | 15 | 9 | 6 | 266 | 247 |
| 14 | 6 | 6 | 538 | 526 | −18 | 10 | 6 | 416 | 411 |
| 16 | 6 | 6 | 387 | 397 | −16 | 10 | 6 | 220 | 251 |
| 18 | 6 | 6 | 561 | 548 | −8 | 10 | 6 | 294 | 278 |
| 20 | 6 | 6 | 792 | 769 | −6 | 10 | 6 | 151 | 146 |
| −23 | 7 | 6 | 366 | 364 | −4 | 10 | 6 | 184 | 177 |
| −19 | 7 | 6 | 425 | 460 | −2 | 10 | 6 | 473 | 472 |
| −17 | 7 | 6 | 336 | 319 | 0 | 10 | 6 | 266 | 276 |
| −15 | 7 | 6 | 932 | 963 | 6 | 10 | 6 | 356 | 337 |
| −13 | 7 | 6 | 776 | 791 | 8 | 10 | 6 | 510 | 512 |
| −11 | 7 | 6 | 371 | 370 | −15 | 11 | 6 | 364 | 382 |
| −9 | 7 | 6 | 557 | 536 | −13 | 11 | 6 | 711 | 699 |
| −7 | 7 | 6 | 683 | 649 | −11 | 11 | 6 | 425 | 382 |
| −5 | 7 | 6 | 1366 | 1318 | −9 | 11 | 6 | 447 | 445 |
| −3 | 7 | 6 | 300 | 286 | −5 | 11 | 6 | 443 | 442 |
| −1 | 7 | 6 | 206 | 207 | −3 | 11 | 6 | 627 | 629 |
| 5 | 7 | 6 | 416 | 404 | −1 | 11 | 6 | 648 | 661 |
| 9 | 7 | 6 | 501 | 474 | 1 | 11 | 6 | 933 | 936 |
| 3 | 11 | 6 | 544 | 552 | 14 | 2 | 7 | 459 | 483 |
| 5 | 11 | 6 | 235 | 221 | 16 | 2 | 7 | 539 | 519 |
| 7 | 11 | 6 | 376 | 385 | 18 | 2 | 7 | 480 | 471 |
| 9 | 11 | 6 | 897 | 897 | 20 | 2 | 7 | 689 | 679 |
| 11 | 11 | 6 | 960 | 957 | 22 | 2 | 7 | 410 | 393 |
| −10 | 12 | 6 | 381 | 394 | −23 | 3 | 7 | 214 | 221 |
| −8 | 12 | 6 | 674 | 683 | −17 | 3 | 7 | 197 | 198 |
| −6 | 12 | 6 | 458 | 454 | −15 | 3 | 7 | 160 | 44 |
| −2 | 12 | 6 | 257 | 287 | −13 | 3 | 7 | 281 | 279 |
| 0 | 12 | 6 | 475 | 473 | −11 | 3 | 7 | 663 | 662 |
| 2 | 12 | 6 | 567 | 578 | −9 | 3 | 7 | 518 | 514 |
| 4 | 12 | 6 | 243 | 256 | −7 | 3 | 7 | 576 | 593 |
| −3 | 13 | 6 | 206 | 213 | −5 | 3 | 7 | 136 | 128 |
| −1 | 13 | 6 | 214 | 150 | −3 | 3 | 7 | 1036 | 1045 |
| 1 | 13 | 6 | 212 | 216 | −1 | 3 | 7 | 134 | 99 |
| −25 | 1 | 7 | 164 | 152 | 1 | 3 | 7 | 418 | 434 |

# TABLE 1-continued

| MO2CO2S4(CO)2(NCCH3)2[S2CH(C2H5)2]2 | | | | | | | | | |
|---|---|---|---|---|---|---|---|---|---|
| H | K | L | FOBS | FCAL | H | K | L | FOBS | FCAL |
| −23 | 1 | 7 | 229 | 214 | 3 | 3 | 7 | 198 | 206 |
| −21 | 1 | 7 | 773 | 778 | 5 | 3 | 7 | 300 | 292 |
| −19 | 1 | 7 | 721 | 755 | 7 | 3 | 7 | 184 | 224 |
| −15 | 1 | 7 | 287 | 299 | 9 | 3 | 7 | 257 | 259 |
| −13 | 1 | 7 | 1836 | 1753 | 11 | 3 | 7 | 284 | 278 |
| −11 | 1 | 7 | 2904 | 2833 | 15 | 3 | 7 | 160 | 42 |
| −9 | 1 | 7 | 1092 | 1089 | 17 | 3 | 7 | 154 | 123 |
| −7 | 1 | 7 | 302 | 253 | 19 | 3 | 7 | 314 | 315 |
| −5 | 1 | 7 | 1076 | 1114 | −22 | 4 | 7 | 406 | 409 |
| −3 | 1 | 7 | 3429 | 3499 | −20 | 4 | 7 | 781 | 796 |
| −1 | 1 | 7 | 2714 | 2789 | −18 | 4 | 7 | 557 | 560 |
| 1 | 1 | 7 | 1565 | 1642 | −16 | 4 | 7 | 426 | 449 |
| 3 | 1 | 7 | 679 | 703 | −14 | 4 | 7 | 552 | 593 |
| 5 | 1 | 7 | 724 | 730 | −12 | 4 | 7 | 1307 | 1323 |
| 7 | 1 | 7 | 2078 | 2115 | −10 | 4 | 7 | 1281 | 1289 |
| 9 | 1 | 7 | 1697 | 1723 | −8 | 4 | 7 | 717 | 708 |
| 11 | 1 | 7 | 1464 | 1464 | −4 | 4 | 7 | 878 | 894 |
| 13 | 1 | 7 | 1006 | 1024 | −2 | 4 | 7 | 1426 | 1464 |
| 15 | 1 | 7 | 337 | 335 | 0 | 4 | 7 | 1322 | 1348 |
| 17 | 1 | 7 | 852 | 857 | 2 | 4 | 7 | 422 | 419 |
| 19 | 1 | 7 | 870 | 877 | 6 | 4 | 7 | 965 | 1010 |
| 21 | 1 | 7 | 905 | 893 | 8 | 4 | 7 | 1150 | 1183 |
| 23 | 1 | 7 | 321 | 316 | 10 | 4 | 7 | 756 | 743 |
| −24 | 2 | 7 | 407 | 391 | 12 | 4 | 7 | 615 | 624 |
| −20 | 2 | 7 | 614 | 611 | 14 | 4 | 7 | 248 | 281 |
| −18 | 2 | 7 | 494 | 511 | 16 | 4 | 7 | 670 | 671 |
| −16 | 2 | 7 | 729 | 751 | 18 | 4 | 7 | 726 | 722 |
| −14 | 2 | 7 | 1208 | 1282 | 20 | 4 | 7 | 534 | 541 |
| −12 | 2 | 7 | 690 | 685 | −21 | 5 | 7 | 525 | 542 |
| −10 | 2 | 7 | 771 | 768 | −19 | 5 | 7 | 272 | 299 |
| −8 | 2 | 7 | 407 | 415 | −17 | 5 | 7 | 209 | 224 |
| −6 | 2 | 7 | 1821 | 1824 | −13 | 5 | 7 | 1159 | 1168 |
| −4 | 2 | 7 | 307 | 326 | −11 | 5 | 7 | 1845 | 1879 |
| −2 | 2 | 7 | 341 | 336 | −9 | 5 | 7 | 807 | 841 |
| 0 | 2 | 7 | 362 | 354 | −5 | 5 | 7 | 1081 | 1098 |
| 2 | 2 | 7 | 461 | 444 | −3 | 5 | 7 | 2337 | 2385 |
| 4 | 2 | 7 | 1229 | 1223 | −1 | 5 | 7 | 2153 | 2189 |
| 6 | 2 | 7 | 214 | 207 | 1 | 5 | 7 | 651 | 672 |
| 10 | 2 | 7 | 155 | 94 | 3 | 5 | 7 | 664 | 664 |
| 12 | 2 | 7 | 870 | 868 | 5 | 5 | 7 | 459 | 450 |
| 7 | 5 | 7 | 1494 | 1491 | 16 | 8 | 7 | 211 | 187 |
| 9 | 5 | 7 | 1159 | 1141 | −19 | 9 | 7 | 330 | 347 |
| 11 | 5 | 7 | 1176 | 1178 | −15 | 9 | 7 | 220 | 260 |
| 13 | 5 | 7 | 1095 | 1087 | −9 | 9 | 7 | 492 | 466 |
| 15 | 5 | 7 | 149 | 135 | −7 | 9 | 7 | 263 | 257 |
| 17 | 5 | 7 | 569 | 562 | −5 | 9 | 7 | 244 | 261 |
| 19 | 5 | 7 | 757 | 749 | 1 | 9 | 7 | 462 | 455 |
| 21 | 5 | 7 | 825 | 807 | 3 | 9 | 7 | 359 | 336 |
| −22 | 6 | 7 | 443 | 451 | 5 | 9 | 7 | 385 | 381 |
| −16 | 6 | 7 | 692 | 730 | 7 | 9 | 7 | 144 | 99 |

## TABLE 1-continued

MO2CO2S4(CO)2(NCCH3)2[S2CH(C2H5)2]2

| H | K | L | FOBS | FCAL | H | K | L | FOBS | FCAL |
|---|---|---|---|---|---|---|---|---|---|
| −14 | 6 | 7 | 1044 | 1074 | 9 | 9 | 7 | 413 | 413 |
| −12 | 6 | 7 | 555 | 530 | 13 | 9 | 7 | 475 | 461 |
| −10 | 6 | 7 | 547 | 544 | 15 | 9 | 7 | 340 | 323 |
| −8 | 6 | 7 | 619 | 587 | −16 | 10 | 7 | 227 | 242 |
| −6 | 6 | 7 | 1104 | 1122 | −14 | 10 | 7 | 733 | 691 |
| −4 | 6 | 7 | 1354 | 1396 | −12 | 10 | 7 | 801 | 783 |
| −2 | 6 | 7 | 1077 | 1073 | −10 | 10 | 7 | 528 | 804 |
| 0 | 6 | 7 | 1294 | 1316 | −8 | 10 | 7 | 500 | 492 |
| 2 | 6 | 7 | 403 | 383 | −6 | 10 | 7 | 340 | 347 |
| 4 | 6 | 7 | 894 | 893 | −4 | 10 | 7 | 961 | 957 |
| 6 | 6 | 7 | 820 | 811 | −2 | 10 | 7 | 984 | 998 |
| 8 | 6 | 7 | 961 | 955 | 0 | 10 | 7 | 1288 | 1281 |
| 10 | 6 | 7 | 926 | 933 | 2 | 10 | 7 | 675 | 684 |
| 14 | 6 | 7 | 236 | 236 | 4 | 10 | 7 | 353 | 353 |
| 16 | 6 | 7 | 157 | 143 | 6 | 10 | 7 | 716 | 721 |
| 18 | 6 | 7 | 352 | 353 | 8 | 10 | 7 | 964 | 973 |
| 20 | 6 | 7 | 186 | 243 | 10 | 10 | 7 | 1066 | 1063 |
| −21 | 7 | 7 | 239 | 280 | 12 | 10 | 7 | 393 | 402 |
| −19 | 7 | 7 | 259 | 256 | −9 | 11 | 7 | 314 | 319 |
| −17 | 7 | 7 | 308 | 311 | −7 | 11 | 7 | 211 | 243 |
| −15 | 7 | 7 | 295 | 277 | −3 | 11 | 7 | 252 | 249 |
| −13 | 7 | 7 | 572 | 560 | −1 | 11 | 7 | 258 | 271 |
| −11 | 7 | 7 | 570 | 587 | 1 | 11 | 7 | 445 | 464 |
| −9 | 7 | 7 | 798 | 752 | 3 | 11 | 7 | 450 | 464 |
| −7 | 7 | 7 | 432 | 406 | 9 | 11 | 7 | 362 | 368 |
| −3 | 7 | 7 | 353 | 354 | −10 | 12 | 7 | 354 | 343 |
| −1 | 7 | 7 | 1039 | 1002 | −8 | 12 | 7 | 255 | 221 |
| 1 | 7 | 7 | 1311 | 1294 | −6 | 12 | 7 | 269 | 240 |
| 3 | 7 | 7 | 739 | 724 | −4 | 12 | 7 | 534 | 537 |
| 7 | 7 | 7 | 687 | 673 | −2 | 12 | 7 | 575 | 586 |
| 9 | 7 | 7 | 1054 | 1041 | 0 | 12 | 7 | 946 | 936 |
| 11 | 7 | 7 | 1271 | 1271 | 2 | 12 | 7 | 490 | 529 |
| 13 | 7 | 7 | 454 | 468 | 6 | 12 | 7 | 286 | 290 |
| 17 | 7 | 7 | 586 | 587 | −26 | 0 | 8 | 638 | 638 |
| 19 | 7 | 7 | 816 | 799 | −24 | 0 | 8 | 668 | 642 |
| −20 | 8 | 7 | 341 | 342 | −22 | 0 | 8 | 1188 | 1184 |
| −18 | 8 | 7 | 436 | 435 | −20 | 0 | 8 | 582 | 578 |
| −16 | 8 | 7 | 616 | 619 | −18 | 0 | 8 | 788 | 809 |
| −14 | 8 | 7 | 400 | 383 | −16 | 0 | 8 | 1137 | 1175 |
| −12 | 8 | 7 | 251 | 231 | −14 | 0 | 8 | 2316 | 2373 |
| −10 | 8 | 7 | 584 | 548 | −12 | 0 | 8 | 2541 | 2449 |
| −8 | 8 | 7 | 629 | 616 | −10 | 0 | 8 | 157 | 88 |
| −6 | 8 | 7 | 345 | 319 | −8 | 0 | 8 | 522 | 502 |
| −2 | 8 | 7 | 452 | 444 | −6 | 0 | 8 | 1469 | 1416 |
| 0 | 8 | 7 | 185 | 164 | −4 | 0 | 8 | 2818 | 2791 |
| 10 | 8 | 7 | 160 | 171 | −2 | 0 | 8 | 1987 | 2059 |
| 0 | 0 | 8 | 861 | 849 | −17 | 3 | 8 | 182 | 177 |
| 2 | 0 | 8 | 663 | 691 | −15 | 3 | 8 | 182 | 160 |
| 4 | 0 | 8 | 240 | 245 | −13 | 3 | 8 | 481 | 502 |
| 6 | 0 | 8 | 1909 | 1960 | −11 | 3 | 8 | 237 | 243 |

## TABLE 1-continued

MO2CO2S4(CO)2(NCCH3)2[S2CH(C2H5)2]2

| H | K | L | FOBS | FCAL | H | K | L | FOBS | FCAL |
|---|---|---|---|---|---|---|---|---|---|
| 8 | 0 | 8 | 1465 | 1506 | −9 | 3 | 8 | 904 | 925 |
| 10 | 0 | 8 | 1634 | 1603 | −3 | 3 | 8 | 322 | 327 |
| 12 | 0 | 8 | 1202 | 1199 | −1 | 3 | 8 | 578 | 590 |
| 14 | 0 | 8 | 311 | 301 | 1 | 3 | 8 | 301 | 295 |
| 16 | 0 | 8 | 1016 | 1041 | 3 | 3 | 8 | 717 | 760 |
| 18 | 0 | 8 | 657 | 650 | 5 | 3 | 8 | 463 | 458 |
| 20 | 0 | 8 | 776 | 771 | 7 | 3 | 8 | 811 | 830 |
| 22 | 0 | 8 | 240 | 243 | 9 | 3 | 8 | 597 | 594 |
| −21 | 1 | 8 | 242 | 219 | 11 | 3 | 8 | 840 | 845 |
| −19 | 1 | 8 | 316 | 321 | 13 | 3 | 8 | 191 | 168 |
| −17 | 1 | 8 | 252 | 257 | 15 | 3 | 8 | 1095 | 1106 |
| −15 | 1 | 8 | 414 | 438 | 17 | 3 | 8 | 1003 | 1004 |
| −13 | 1 | 8 | 297 | 297 | 19 | 3 | 8 | 682 | 667 |
| −11 | 1 | 8 | 542 | 561 | 21 | 3 | 8 | 279 | 308 |
| −9 | 1 | 8 | 591 | 583 | −24 | 4 | 8 | 219 | 215 |
| −5 | 1 | 8 | 181 | 239 | −22 | 4 | 8 | 625 | 629 |
| −3 | 1 | 8 | 229 | 227 | −20 | 4 | 8 | 296 | 273 |
| −1 | 1 | 8 | 504 | 516 | −18 | 4 | 8 | 529 | 540 |
| 3 | 1 | 8 | 307 | 310 | −16 | 4 | 8 | 352 | 379 |
| 5 | 1 | 8 | 243 | 232 | −14 | 4 | 8 | 942 | 951 |
| 7 | 1 | 8 | 586 | 579 | −12 | 4 | 8 | 1293 | 1297 |
| 11 | 1 | 8 | 410 | 405 | −8 | 4 | 8 | 199 | 209 |
| 13 | 1 | 8 | 158 | 161 | −6 | 4 | 8 | 307 | 314 |
| 15 | 1 | 8 | 823 | 836 | −4 | 4 | 8 | 1113 | 1130 |
| 17 | 1 | 8 | 506 | 526 | −2 | 4 | 8 | 810 | 818 |
| 19 | 1 | 8 | 508 | 503 | 0 | 4 | 8 | 232 | 256 |
| 21 | 1 | 8 | 202 | 181 | 2 | 4 | 8 | 842 | 872 |
| −26 | 2 | 8 | 223 | 203 | 4 | 4 | 8 | 377 | 398 |
| −24 | 2 | 8 | 371 | 349 | 6 | 4 | 8 | 676 | 659 |
| −22 | 2 | 8 | 354 | 359 | 8 | 4 | 8 | 367 | 335 |
| −18 | 2 | 8 | 238 | 248 | 10 | 4 | 8 | 513 | 507 |
| −16 | 2 | 8 | 412 | 421 | 12 | 4 | 8 | 993 | 1002 |
| −14 | 2 | 8 | 529 | 544 | 16 | 4 | 8 | 179 | 179 |
| −12 | 2 | 8 | 509 | 491 | 20 | 4 | 8 | 361 | 355 |
| −10 | 2 | 8 | 442 | 437 | −23 | 5 | 8 | 570 | 559 |
| −8 | 2 | 8 | 159 | 133 | −21 | 5 | 8 | 301 | 331 |
| −6 | 2 | 8 | 263 | 224 | −17 | 5 | 8 | 393 | 407 |
| −4 | 2 | 8 | 344 | 352 | −15 | 5 | 8 | 1073 | 1085 |
| −2 | 2 | 8 | 1015 | 1010 | −13 | 5 | 8 | 794 | 792 |
| 0 | 2 | 8 | 476 | 509 | −11 | 5 | 8 | 1018 | 1021 |
| 2 | 2 | 8 | 893 | 909 | −9 | 5 | 8 | 432 | 423 |
| 4 | 2 | 8 | 209 | 213 | −7 | 5 | 8 | 921 | 953 |
| 6 | 2 | 8 | 601 | 625 | −5 | 5 | 8 | 1199 | 1224 |
| 8 | 2 | 8 | 762 | 774 | −3 | 5 | 8 | 1343 | 1359 |
| 10 | 2 | 8 | 801 | 798 | −1 | 5 | 8 | 1167 | 1207 |
| 12 | 2 | 8 | 539 | 558 | 1 | 5 | 8 | 295 | 316 |
| 16 | 2 | 8 | 410 | 404 | 3 | 5 | 8 | 563 | 559 |
| 18 | 2 | 8 | 600 | 599 | 5 | 5 | 8 | 1218 | 1211 |
| 20 | 2 | 8 | 427 | 430 | 7 | 5 | 8 | 835 | 816 |
| −23 | 3 | 8 | 164 | 190 | 9 | 5 | 8 | 920 | 909 |

## TABLE 1-continued

MO2CO2S4(CO)2(NCCH3)2[S2CH(C2H5)2]2

| H | K | L | FOBS | FCAL | H | K | L | FOBS | FCAL |
|---|---|---|---|---|---|---|---|---|---|
| −21 | 3 | 8 | 396 | 411 | 11 | 5 | 8 | 164 | 158 |
| −19 | 3 | 8 | 163 | 191 | 13 | 5 | 8 | 403 | 415 |
| 15 | 5 | 8 | 288 | 285 | −11 | 9 | 8 | 187 | 201 |
| 17 | 5 | 8 | 542 | 543 | −7 | 9 | 8 | 452 | 449 |
| 19 | 5 | 8 | 336 | 339 | −5 | 9 | 8 | 499 | 490 |
| −22 | 6 | 8 | 449 | 466 | −3 | 9 | 8 | 462 | 467 |
| −20 | 6 | 8 | 184 | 186 | −1 | 9 | 8 | 299 | 299 |
| −18 | 6 | 8 | 255 | 253 | 1 | 9 | 8 | 145 | 141 |
| −16 | 6 | 8 | 637 | 619 | 3 | 9 | 8 | 352 | 329 |
| −14 | 6 | 8 | 927 | 926 | 5 | 9 | 8 | 476 | 487 |
| −12 | 6 | 8 | 868 | 871 | 7 | 9 | 8 | 418 | 406 |
| −10 | 6 | 8 | 451 | 420 | 9 | 9 | 8 | 539 | 550 |
| −4 | 6 | 8 | 859 | 834 | 13 | 9 | 8 | 165 | 160 |
| −2 | 6 | 8 | 1324 | 1285 | −6 | 10 | 8 | 520 | 508 |
| 0 | 6 | 8 | 833 | 802 | −2 | 10 | 8 | 155 | 155 |
| 2 | 6 | 8 | 1351 | 1328 | 0 | 10 | 8 | 184 | 212 |
| 4 | 6 | 8 | 229 | 199 | 2 | 10 | 8 | 899 | 904 |
| 6 | 6 | 8 | 772 | 753 | 4 | 10 | 8 | 807 | 795 |
| 8 | 6 | 8 | 1250 | 1221 | 6 | 10 | 8 | 255 | 262 |
| 10 | 6 | 8 | 1509 | 1503 | 10 | 10 | 8 | 662 | 664 |
| 12 | 6 | 8 | 963 | 957 | 12 | 10 | 8 | 713 | 717 |
| 16 | 6 | 8 | 652 | 651 | −13 | 11 | 8 | 581 | 554 |
| 18 | 6 | 8 | 865 | 867 | −11 | 11 | 8 | 553 | 557 |
| −19 | 7 | 8 | 188 | 207 | −9 | 11 | 8 | 568 | 566 |
| −15 | 7 | 8 | 476 | 473 | −7 | 11 | 8 | 248 | 256 |
| −13 | 7 | 8 | 444 | 472 | −5 | 11 | 8 | 722 | 709 |
| −11 | 7 | 8 | 550 | 554 | −3 | 11 | 8 | 698 | 677 |
| −9 | 7 | 8 | 977 | 957 | −1 | 11 | 8 | 1117 | 1123 |
| −7 | 7 | 8 | 174 | 177 | 1 | 11 | 8 | 673 | 678 |
| −5 | 7 | 8 | 676 | 658 | 5 | 11 | 8 | 261 | 255 |
| −3 | 7 | 8 | 687 | 680 | 7 | 11 | 8 | 753 | 758 |
| −1 | 7 | 8 | 1389 | 1370 | 9 | 11 | 8 | 888 | 906 |
| 1 | 7 | 8 | 707 | 711 | −8 | 12 | 8 | 202 | 201 |
| -3 | 7 | 8 | 507 | 512 | 0 | 12 | 8 | 461 | 474 |
| 7 | 7 | 8 | 379 | 372 | −25 | 1 | 9 | 710 | 688 |
| 9 | 7 | 8 | 532 | 549 | −23 | 1 | 9 | 841 | 844 |
| 13 | 7 | 8 | 165 | 137 | −21 | 1 | 9 | 199 | 241 |
| 15 | 7 | 8 | 346 | 348 | −19 | 1 | 9 | 710 | 713 |
| 17 | 7 | 8 | 172 | 132 | −17 | 1 | 9 | 878 | 892 |
| −20 | 8 | 8 | 188 | 117 | −15 | 1 | 9 | 1225 | 1219 |
| −16 | 8 | 8 | 203 | 229 | −13 | 1 | 9 | 1122 | 1118 |
| −10 | 8 | 8 | 527 | 496 | −11 | 1 | 9 | 235 | 232 |
| −8 | 8 | 8 | 219 | 207 | −9 | 1 | 9 | 323 | 339 |
| −6 | 8 | 8 | 474 | 467 | −7 | 1 | 9 | 242 | 219 |
| −4 | 8 | 8 | 272 | 247 | −5 | 1 | 9 | 1208 | 1231 |
| −2 | 8 | 8 | 390 | 370 | −3 | 1 | 9 | 1266 | 1278 |
| 0 | 8 | 8 | 789 | 798 | −1 | 1 | 9 | 613 | 648 |
| 2 | 8 | 8 | 195 | 201 | 1 | 1 | 9 | 933 | 954 |
| 4 | 8 | 8 | 485 | 485 | 3 | 1 | 9 | 207 | 207 |
| 6 | 8 | 8 | 491 | 503 | 5 | 1 | 9 | 1154 | 1178 |

TABLE 1-continued

MO2CO2S4(CO)2(NCCH3)2[S2CH(C2H5)2]2

| H | K | L | FOBS | FCAL | H | K | L | FOBS | FCAL |
|---|---|---|---|---|---|---|---|---|---|
| 8 | 8 | 8 | 822 | 816 | 7 | 1 | 9 | 874 | 860 |
| 10 | 8 | 8 | 573 | 571 | 9 | 1 | 9 | 669 | 668 |
| 12 | 8 | 8 | 324 | 319 | 11 | 1 | 9 | 725 | 740 |
| 14 | 8 | 8 | 355 | 353 | 13 | 1 | 9 | 290 | 312 |
| 16 | 8 | 8 | 576 | 583 | 15 | 1 | 9 | 483 | 498 |
| −17 | 9 | 8 | 313 | 304 | 19 | 1 | 9 | 288 | 327 |
| −15 | 9 | 8 | 480 | 477 | 21 | 1 | 9 | 177 | 148 |
| −13 | 9 | 8 | 479 | 479 | −24 | 2 | 9 | 170 | 118 |
| −20 | 2 | 9 | 775 | 767 | −17 | 5 | 9 | 691 | 702 |
| −18 | 2 | 9 | 705 | 701 | −15 | 5 | 9 | 678 | 699 |
| −12 | 2 | 9 | 978 | 978 | −13 | 5 | 9 | 801 | 828 |
| −10 | 2 | 9 | 1311 | 1299 | −11 | 5 | 9 | 223 | 176 |
| −8 | 2 | 9 | 226 | 185 | −7 | 5 | 9 | 467 | 467 |
| −6 | 2 | 9 | 284 | 305 | −5 | 5 | 9 | 454 | 447 |
| −4 | 2 | 9 | 166 | 133 | −3 | 5 | 9 | 853 | 826 |
| −2 | 2 | 9 | 213 | 223 | −1 | 5 | 9 | 551 | 537 |
| 0 | 2 | 9 | 349 | 321 | 1 | 5 | 9 | 1425 | 1391 |
| 2 | 2 | 9 | 442 | 441 | 3 | 5 | 9 | 456 | 441 |
| 4 | 2 | 9 | 1032 | 1056 | 5 | 5 | 9 | 564 | 555 |
| 6 | 2 | 9 | 1509 | 1472 | 7 | 5 | 9 | 575 | 579 |
| 8 | 2 | 9 | 434 | 434 | 9 | 5 | 9 | 667 | 670 |
| 10 | 2 | 9 | 532 | 538 | 11 | 5 | 9 | 792 | 778 |
| 12 | 2 | 9 | 316 | 302 | 15 | 5 | 9 | 227 | 259 |
| 14 | 2 | 9 | 1475 | 1495 | −22 | 6 | 9 | 184 | 198 |
| 16 | 2 | 9 | 830 | 832 | −20 | 6 | 9 | 354 | 350 |
| 18 | 2 | 9 | 567 | 588 | −16 | 6 | 9 | 746 | 764 |
| 20 | 2 | 9 | 298 | 281 | −14 | 6 | 9 | 751 | 772 |
| −19 | 3 | 9 | 180 | 167 | −12 | 6 | 9 | 698 | 705 |
| −17 | 3 | 9 | 204 | 207 | −10 | 6 | 9 | 607 | 588 |
| −9 | 3 | 9 | 221 | 174 | −8 | 6 | 9 | 524 | 504 |
| −7 | 3 | 9 | 251 | 240 | −6 | 6 | 9 | 835 | 798 |
| −5 | 3 | 9 | 155 | 158 | −4 | 6 | 9 | 631 | 604 |
| −1 | 3 | 9 | 185 | 185 | −2 | 6 | 9 | 934 | 912 |
| 1 | 3 | 9 | 208 | 204 | 0 | 6 | 9 | 355 | 359 |
| 3 | 3 | 9 | 898 | 930 | 2 | 6 | 9 | 710 | 684 |
| 7 | 3 | 9 | 556 | 538 | 8 | 6 | 9 | 436 | 432 |
| 9 | 3 | 9 | 312 | 316 | 10 | 6 | 9 | 220 | 229 |
| 11 | 3 | 9 | 541 | 534 | 14 | 6 | 9 | 334 | 338 |
| 15 | 3 | 9 | 378 | 384 | −19 | 7 | 9 | 297 | 285 |
| 17 | 3 | 9 | 465 | 485 | −17 | 7 | 9 | 492 | 507 |
| −24 | 4 | 9 | 452 | 444 | −15 | 7 | 9 | 273 | 292 |
| −22 | 4 | 9 | 199 | 183 | −13 | 7 | 9 | 184 | 189 |
| −20 | 4 | 9 | 441 | 436 | −11 | 7 | 9 | 193 | 182 |
| −18 | 4 | 9 | 883 | 889 | −7 | 7 | 9 | 271 | 286 |
| −16 | 4 | 9 | 822 | 843 | −5 | 7 | 9 | 523 | 513 |
| −14 | 4 | 9 | 458 | 460 | −3 | 7 | 9 | 367 | 364 |
| −12 | 4 | 9 | 228 | 200 | −1 | 7 | 9 | 629 | 608 |
| −10 | 4 | 9 | 921 | 913 | 1 | 7 | 9 | 222 | 226 |
| −8 | 4 | 9 | 938 | 928 | 3 | 7 | 9 | 259 | 276 |
| −6 | 4 | 9 | 1003 | 1037 | 5 | 7 | 9 | 429 | 451 |

## TABLE 1-continued

MO2CO2S4(CO)2(NCCH3)2[S2CH(C2H5)2]2

| H | K | L | FOBS | FCAL | H | K | L | FOBS | FCAL |
|---|---|---|---|---|---|---|---|---|---|
| −4 | 4 | 9 | 1124 | 1155 | 7 | 7 | 9 | 904 | 906 |
| −2 | 4 | 9 | 238 | 258 | 9 | 7 | 9 | 801 | 798 |
| 0 | 4 | 9 | 150 | 140 | 13 | 7 | 9 | 255 | 210 |
| 2 | 4 | 9 | 828 | 830 | 15 | 7 | 9 | 617 | 620 |
| 4 | 4 | 9 | 1261 | 1246 | −18 | 8 | 9 | 488 | 500 |
| 6 | 4 | 9 | 993 | 979 | −12 | 8 | 9 | 436 | 423 |
| 8 | 4 | 9 | 625 | 618 | −10 | 8 | 9 | 918 | 899 |
| 12 | 4 | 9 | 595 | 601 | −8 | 8 | 9 | 370 | 363 |
| 14 | 4 | 9 | 821 | 825 | −2 | 8 | 9 | 503 | 487 |
| 16 | 4 | 9 | 790 | 802 | 0 | 8 | 9 | 243 | 235 |
| 18 | 4 | 9 | 331 | 318 | 2 | 8 | 9 | 271 | 276 |
| −23 | 5 | 9 | 598 | 597 | 4 | 8 | 9 | 471 | 482 |
| −21 | 5 | 9 | 188 | 178 | 6 | 8 | 9 | 293 | 285 |
| −19 | 5 | 9 | 530 | 563 | 10 | 8 | 9 | 154 | 127 |
| 12 | 8 | 9 | 293 | 280 | −9 | 1 | 10 | 634 | 622 |
| 14 | 8 | 9 | 439 | 433 | −7 | 1 | 10 | 342 | 347 |
| −17 | 9 | 9 | 311 | 292 | −5 | 1 | 10 | 931 | 937 |
| −15 | 9 | 9 | 426 | 432 | −1 | 1 | 10 | 609 | 632 |
| −9 | 9 | 9 | 497 | 490 | 1 | 1 | 10 | 282 | 292 |
| −7 | 9 | 9 | 1112 | 1083 | 3 | 1 | 10 | 1326 | 1360 |
| −5 | 9 | 9 | 498 | 491 | 5 | 1 | 10 | 1158 | 1159 |
| −3 | 9 | 9 | 273 | 276 | 11 | 1 | 10 | 551 | 567 |
| 1 | 9 | 9 | 1143 | 1136 | 13 | 1 | 10 | 983 | 1004 |
| 3 | 9 | 9 | 1128 | 1142 | 15 | 1 | 10 | 356 | 356 |
| 5 | 9 | 9 | 578 | 571 | 17 | 1 | 10 | 242 | 263 |
| 7 | 9 | 9 | 427 | 414 | −20 | 2 | 10 | 228 | 254 |
| 9 | 9 | 9 | 223 | 215 | −18 | 2 | 10 | 386 | 381 |
| 11 | 9 | 9 | 701 | 698 | −16 | 2 | 10 | 385 | 369 |
| 13 | 9 | 9 | 582 | 594 | −14 | 2 | 10 | 485 | 445 |
| −14 | 10 | 9 | 598 | 599 | −8 | 2 | 10 | 297 | 259 |
| −12 | 10 | 9 | 395 | 369 | −6 | 2 | 10 | 574 | 58[illegible] |
| −10 | 10 | 9 | 169 | 168 | −4 | 2 | 10 | 370 | 403 |
| −8 | 10 | 9 | 648 | 631 | −2 | 2 | 10 | 249 | 235 |
| −6 | 10 | 9 | 918 | 884 | 2 | 2 | 10 | 418 | 415 |
| −4 | 10 | 9 | 559 | 558 | 4 | 2 | 10 | 381 | 359 |
| −2 | 10 | 9 | 658 | 665 | 6 | 2 | 10 | 586 | 585 |
| 2 | 10 | 9 | 455 | 470 | 12 | 2 | 10 | 284 | 314 |
| 4 | 10 | 9 | 414 | 402 | 14 | 2 | 10 | 336 | 350 |
| 6 | 10 | 9 | 504 | 504 | −21 | 3 | 10 | 780 | 777 |
| 8 | 10 | 9 | 513 | 516 | −19 | 3 | 10 | 1052 | 1040 |
| −7 | 11 | 9 | 265 | 274 | −17 | 3 | 10 | 488 | 499 |
| −5 | 11 | 9 | 263 | 286 | −15 | 3 | 10 | 308 | 328 |
| −1 | 11 | 9 | 374 | 367 | −11 | 3 | 10 | 1063 | 1103 |
| 1 | 11 | 9 | 403 | 402 | −9 | 3 | 10 | 966 | 956 |
| 3 | 11 | 9 | 383 | 368 | −7 | 3 | 10 | 1271 | 1274 |
| −24 | 0 | 10 | 689 | 670 | −5 | [illegible] | 10 | [illegible]447 | 1378 |
| −20 | 0 | 10 | 771 | 779 | −3 | 3 | 10 | 212 | 242 |
| −18 | 0 | 10 | 870 | 848 | −1 | 3 | 10 | 652 | 683 |
| −16 | 0 | 10 | 831 | 818 | 1 | 3 | 10 | 1254 | 1224 |
| −14 | 0 | 10 | 909 | 900 | 3 | 3 | 10 | 2069 | 2038 |

TABLE 1-continued

| MO2CO2S4(CO)2(NCCH3)2[S2CH(C2H5)2]2 | | | | | | | | | |
|---|---|---|---|---|---|---|---|---|---|
| H | K | L | FOBS | FCAL | H | K | L | FOBS | FCAL |
| −12 | 0 | 10 | 202 | 212 | 5 | 3 | 10 | 1702 | 1689 |
| −10 | 0 | 10 | 599 | 575 | 9 | 3 | 10 | 185 | 222 |
| −8 | 0 | 10 | 416 | 419 | 11 | 3 | 10 | 799 | 809 |
| −6 | 0 | 10 | 1285 | 1259 | 13 | 3 | 10 | 1207 | 1219 |
| −4 | 0 | 10 | 1070 | 1101 | 15 | 3 | 10 | 641 | 662 |
| −2 | 0 | 10 | 221 | 234 | 17 | 3 | 10 | 232 | 238 |
| 0 | 0 | 10 | 389 | 383 | −22 | 4 | 10 | 187 | 178 |
| 2 | 0 | 10 | 475 | 483 | −20 | 4 | 10 | 223 | 218 |
| 4 | 0 | 10 | 1544 | 1490 | −18 | 4 | 10 | 201 | 186 |
| 6 | 0 | 10 | 520 | 529 | −16 | 4 | 10 | 236 | 225 |
| 8 | 0 | 10 | 678 | 686 | −14 | 4 | 10 | 448 | 467 |
| 10 | 0 | 10 | 225 | 214 | −8 | 4 | 10 | 454 | 466 |
| 12 | 0 | 10 | 551 | 560 | −4 | 4 | 10 | 454 | 459 |
| 16 | 0 | 10 | 509 | 500 | −2 | 4 | 10 | 348 | 328 |
| 18 | 0 | 10 | 199 | 217 | 0 | 4 | 10 | 394 | 387 |
| −21 | 1 | 10 | 464 | 458 | 2 | 4 | 10 | 428 | 422 |
| −19 | 1 | 10 | 557 | 554 | 4 | 4 | 10 | 229 | 232 |
| −17 | 1 | 10 | 199 | 226 | 6 | 4 | 10 | 677 | 659 |
| −13 | 1 | 10 | 339 | 341 | 8 | 4 | 10 | 479 | 488 |
| −11 | 1 | 10 | 713 | 705 | 14 | 4 | 10 | 401 | 401 |
| 16 | 4 | 10 | 720 | 722 | 0 | 8 | 10 | 797 | 792 |
| 18 | 4 | 10 | 242 | 241 | 2 | 8 | 10 | 926 | 937 |
| −19 | 5 | 10 | 521 | 538 | 4 | 8 | 10 | 813 | 820 |
| −17 | 5 | 10 | 859 | 877 | 6 | 8 | 10 | 720 | 729 |
| −15 | 5 | 10 | 830 | 840 | 8 | 8 | 10 | 330 | 346 |
| −13 | 5 | 10 | 301 | 338 | 10 | 8 | 10 | 428 | 432 |
| −11 | 5 | 10 | 392 | 357 | 12 | 8 | 10 | 583 | 576 |
| −9 | 5 | 10 | 786 | 784 | −15 | 9 | 10 | 437 | 458 |
| −7 | 5 | 10 | 1346 | 1299 | −11 | 9 | 10 | 398 | 401 |
| −5 | 5 | 10 | 661 | 632 | −9 | 9 | 10 | 824 | 801 |
| −3 | 5 | 10 | 329 | 291 | −7 | 9 | 10 | 879 | 848 |
| −1 | 5 | 10 | 315 | 295 | −5 | 9 | 10 | 554 | 528 |
| 1 | 5 | 10 | 1219 | 1181 | −1 | 9 | 10 | 492 | 487 |
| 3 | 5 | 10 | 586 | 555 | 1 | 9 | 10 | 753 | 749 |
| 5 | 5 | 10 | 386 | 395 | 3 | 9 | 10 | 674 | 681 |
| 7 | 5 | 10 | 243 | 230 | 5 | 9 | 10 | 357 | 360 |
| 9 | 5 | 10 | 496 | 484 | 9 | 9 | 10 | 333 | 346 |
| 11 | 5 | 10 | 402 | 391 | 11 | 9 | 10 | 371 | 349 |
| 13 | 5 | 10 | 221 | 237 | −10 | 10 | 10 | 425 | 391 |
| 15 | 5 | 10 | 238 | 216 | −8 | 10 | 10 | 799 | 770 |
| −20 | 6 | 10 | 406 | 442 | −6 | 10 | 10 | 373 | 356 |
| −18 | 6 | 10 | 426 | 465 | −2 | 10 | 10 | 232 | 232 |
| −16 | 6 | 10 | 372 | 355 | 0 | 10 | 10 | 516 | 523 |
| −14 | 6 | 10 | 539 | 561 | 2 | 10 | 10 | 544 | 567 |
| −8 | 6 | 10 | 277 | 233 | 4 | 10 | 10 | 253 | 266 |
| −6 | 6 | 10 | 796 | 763 | 6 | 10 | 10 | 261 | 224 |
| −4 | 6 | 10 | 572 | 546 | 8 | 10 | 10 | 170 | 58 |
| −2 | 6 | 10 | 327 | 345 | −7 | 11 | 10 | 418 | 381 |
| 2 | 6 | 10 | 519 | 509 | −5 | 11 | 10 | 351 | 338 |
| 4 | 6 | 10 | 565 | 578 | −3 | 11 | 10 | 483 | 481 |

TABLE 1-continued

| MO2CO2S4(CO)2(NCCH3)2[S2CH(C2H5)2]2 | | | | | | | | | |
|---|---|---|---|---|---|---|---|---|---|
| H | K | L | FOBS | FCAL | H | K | L | FOBS | FCAL |
| 6 | 6 | 10 | 494 | 524 | −1 | 11 | 10 | 273 | 238 |
| 12 | 6 | 10 | 331 | 324 | 1 | 11 | 10 | 161 | 164 |
| 14 | 6 | 10 | 336 | 365 | 3 | 11 | 10 | 210 | 128 |
| 19 | 7 | 10 | 405 | 391 | −23 | 1 | 11 | 257 | 269 |
| 17 | 7 | 10 | 170 | 126 | −21 | 1 | 11 | 216 | 223 |
| 15 | 7 | 10 | 191 | 211 | −19 | 1 | 11 | 394 | 382 |
| 13 | 7 | 10 | 407 | 408 | −17 | 1 | 11 | 569 | 570 |
| 11 | 7 | 10 | 855 | 860 | −15 | 1 | 11 | 827 | 813 |
| −5 | 7 | 10 | 293 | 277 | −13 | 1 | 11 | 339 | 328 |
| −3 | 7 | 10 | 352 | 345 | −11 | 1 | 11 | 535 | 521 |
| −1 | 7 | 10 | 519 | 499 | −9 | 1 | 11 | 722 | 696 |
| 1 | 7 | 10 | 425 | 422 | −7 | 1 | 11 | 1110 | 1121 |
| 3 | 7 | 10 | 694 | 679 | −5 | 1 | 11 | 832 | 834 |
| 5 | 7 | 10 | 452 | 452 | −3 | 1 | 11 | 697 | 693 |
| 7 | 7 | 10 | 301 | 287 | −1 | 1 | 11 | 1031 | 981 |
| 9 | 7 | 10 | 290 | 249 | 1 | 1 | 11 | 1063 | 1029 |
| 11 | 7 | 10 | 257 | 249 | 3 | 1 | 11 | 924 | 921 |
| 13 | 7 | 10 | 423 | 418 | 5 | 1 | 11 | 538 | 521 |
| 18 | 8 | 10 | 502 | 497 | 7 | 1 | 11 | 938 | 940 |
| 16 | 8 | 10 | 542 | 560 | 9 | 1 | 11 | 660 | 678 |
| 14 | 8 | 10 | 179 | 144 | 11 | 1 | 11 | 553 | 565 |
| 10 | 8 | 10 | 542 | 529 | 15 | 1 | 11 | 328 | 343 |
| −8 | 8 | 10 | 1016 | 985 | 17 | 1 | 11 | 287 | 302 |
| −6 | 8 | 10 | 766 | 748 | −22 | 2 | 11 | 281 | 267 |
| −4 | 8 | 10 | 474 | 453 | −20 | 2 | 11 | 606 | 590 |
| −2 | 8 | 10 | 256 | 249 | −18 | 2 | 11 | 419 | 401 |
| −16 | 2 | 11 | 649 | 636 | −5 | 5 | 11 | 555 | 514 |
| −14 | 2 | 11 | 688 | 686 | −3 | 5 | 11 | 550 | 529 |
| −12 | 2 | 11 | 406 | 387 | −1 | 5 | 11 | 626 | 614 |
| −10 | 2 | 11 | 1037 | 1023 | 1 | 5 | 11 | 438 | 420 |
| −8 | 2 | 11 | 1539 | 1534 | 3 | 5 | 11 | 436 | 426 |
| −6 | 2 | 11 | 2132 | 2120 | 5 | 5 | 11 | 443 | 443 |
| −4 | 2 | 11 | 805 | 777 | 7 | 5 | 11 | 889 | 897 |
| −2 | 2 | 11 | 837 | 776 | 9 | 5 | 11 | 309 | 338 |
| 0 | 2 | 11 | 1058 | 1011 | 11 | 5 | 11 | 301 | 303 |
| 2 | 2 | 11 | 2332 | 2302 | 15 | 5 | 11 | 500 | 506 |
| 4 | 2 | 11 | 1530 | 1514 | −18 | 6 | 11 | 302 | 290 |
| 6 | 2 | 11 | 336 | 337 | −16 | 6 | 11 | 179 | 166 |
| 10 | 2 | 11 | 662 | 664 | −10 | 6 | 11 | 191 | 197 |
| 12 | 2 | 11 | 1014 | 1036 | −6 | 6 | 11 | 479 | 477 |
| 14 | 2 | 11 | 663 | 681 | −4 | 6 | 11 | 277 | 261 |
| 16 | 2 | 11 | 263 | 293 | 2 | 6 | 11 | 359 | 359 |
| 18 | 2 | 11 | 229 | 247 | 4 | 6 | 11 | 463 | 464 |
| −23 | 3 | 11 | 187 | 198 | 8 | 6 | 11 | 230 | 203 |
| −17 | 3 | 11 | 214 | 186 | 10 | 6 | 11 | 183 | 159 |
| −13 | 3 | 11 | 231 | 221 | 12 | 6 | 11 | 167 | 146 |
| −9 | 3 | 11 | 673 | 672 | −19 | 7 | 11 | 303 | 338 |
| −7 | 3 | 11 | 233 | 215 | −17 | 7 | 11 | 490 | 488 |
| −3 | 3 | 11 | 363 | 367 | −15 | 7 | 11 | 363 | 347 |
| −1 | 3 | 11 | 333 | 291 | −11 | 7 | 11 | 259 | 304 |

## TABLE 1-continued

$MO2CO2S4(CO)2(NCCH3)2[S2CH(C2H5)2]2$

| H | K | L | FOBS | FCAL | H | K | L | FOBS | FCAL |
|---|---|---|---|---|---|---|---|---|---|
| 1 | 3 | 11 | 288 | 287 | −9 | 7 | 11 | 684 | 681 |
| 3 | 3 | 11 | 405 | 403 | −7 | 7 | 11 | 817 | 799 |
| 5 | 3 | 11 | 803 | 811 | −5 | 7 | 11 | 642 | 625 |
| 7 | 3 | 11 | 359 | 386 | −3 | 7 | 11 | 310 | 236 |
| 11 | 3 | 11 | 310 | 342 | −1 | 7 | 11 | 625 | 629 |
| 13 | 3 | 11 | 519 | 539 | 1 | 7 | 11 | 881 | 876 |
| 15 | 3 | 11 | 442 | 445 | 3 | 7 | 11 | 922 | 921 |
| 17 | 3 | 11 | 270 | 239 | 5 | 7 | 11 | 568 | 549 |
| −22 | 4 | 11 | 326 | 321 | 9 | 7 | 11 | 434 | 444 |
| −20 | 4 | 11 | 681 | 672 | 11 | 7 | 11 | 587 | 604 |
| −18 | 4 | 11 | 813 | 807 | 13 | 7 | 11 | 532 | 549 |
| −16 | 4 | 11 | 878 | 873 | −16 | 8 | 11 | 489 | 506 |
| −14 | 4 | 11 | 279 | 261 | −14 | 8 | 11 | 312 | 304 |
| −12 | 4 | 11 | 542 | 560 | −12 | 8 | 11 | 308 | 286 |
| −10 | 4 | 11 | 1253 | 1255 | −10 | 8 | 11 | 776 | 725 |
| −8 | 4 | 11 | 1611 | 1584 | −8 | 8 | 11 | 1026 | 1003 |
| −6 | 4 | 11 | 1377 | 1352 | −6 | 8 | 11 | 930 | 915 |
| −4 | 4 | 11 | 478 | 453 | −4 | 8 | 11 | 186 | 134 |
| −2 | 4 | 11 | 943 | 934 | −2 | 8 | 11 | 639 | 638 |
| 0 | 4 | 11 | 1665 | 1638 | 0 | 8 | 11 | 851 | 826 |
| 2 | 4 | 11 | 1490 | 1469 | 2 | 8 | 11 | 791 | 785 |
| 4 | 4 | 11 | 1172 | 1148 | 4 | 8 | 11 | 531 | 544 |
| 6 | 4 | 11 | 250 | 232 | 6 | 8 | 11 | 189 | 184 |
| 8 | 4 | 11 | 548 | 560 | 8 | 8 | 11 | 305 | 302 |
| 10 | 4 | 11 | 711 | 721 | 10 | 8 | 11 | 172 | 152 |
| 12 | 4 | 11 | 750 | 756 | −13 | 9 | 11 | 320 | 294 |
| 14 | 4 | 11 | 357 | 321 | −11 | 9 | 11 | 610 | 599 |
| −17 | 5 | 11 | 176 | 154 | −9 | 9 | 11 | 926 | 923 |
| −15 | 5 | 11 | 695 | 718 | −7 | 9 | 11 | 550 | 556 |
| −13 | 5 | 11 | 378 | 350 | −1 | 9 | 11 | 429 | 435 |
| −9 | 5 | 11 | 355 | 359 | 1 | 9 | 11 | 759 | 774 |
| −7 | 5 | 11 | 671 | 658 | 3 | 9 | 11 | 498 | 515 |
| 5 | 9 | 11 | 545 | 547 | 10 | 2 | 12 | 500 | 507 |
| 7 | 9 | 11 | 398 | 383 | 12 | 2 | 12 | 422 | 426 |
| 9 | 9 | 11 | 346 | 363 | −21 | 3 | 12 | 534 | 509 |
| 10 | 10 | 11 | 579 | 559 | −19 | 3 | 12 | 721 | 700 |
| −8 | 10 | 11 | 680 | 666 | −17 | 3 | 12 | 907 | 886 |
| −6 | 10 | 11 | 374 | 392 | −15 | 3 | 12 | 776 | 765 |
| −2 | 10 | 11 | 341 | 344 | −13 | 3 | 12 | 459 | 400 |
| 0 | 10 | 11 | 629 | 645 | −11 | 3 | 12 | 1201 | 1226 |
| 2 | 10 | 11 | 556 | 561 | −9 | 3 | 12 | 1412 | 1406 |
| 20 | 0 | 12 | 383 | 388 | −7 | 3 | 12 | 1818 | 1771 |
| 18 | 0 | 12 | 443 | 397 | −5 | 3 | 12 | 614 | 589 |
| 16 | 0 | 12 | 603 | 557 | −3 | 3 | 12 | 702 | 690 |
| 12 | 0 | 12 | 1219 | 1196 | −1 | 3 | 12 | 1095 | 1062 |
| 10 | 0 | 12 | 826 | 814 | 1 | 3 | 12 | 1483 | 1464 |
| −8 | 0 | 12 | 841 | 846 | 3 | 3 | 12 | 1258 | 1267 |
| −4 | 0 | 12 | 1490 | 1496 | 5 | 3 | 12 | 313 | 298 |
| −2 | 0 | 12 | 1574 | 1561 | 9 | 3 | 12 | 448 | 462 |
| 0 | 0 | 12 | 1136 | 1090 | 11 | 3 | 12 | 859 | 871 |

TABLE 1-continued

| MO2CO2S4(CO)2(NCCH3)2[S2CH(C2H5)2]2 | | | | | | | | | |
|---|---|---|---|---|---|---|---|---|---|
| H | K | L | FOBS | FCAL | H | K | L | FOBS | FCAL |
| 2 | 0 | 12 | 405 | 405 | 13 | 3 | 12 | 611 | 634 |
| 4 | 0 | 12 | 717 | 700 | 15 | 3 | 12 | 192 | 202 |
| 6 | 0 | 12 | 1228 | 1243 | −18 | 4 | 12 | 199 | 120 |
| 8 | 0 | 12 | 1042 | 1060 | −16 | 4 | 12 | 312 | 298 |
| 10 | 0 | 12 | 597 | 623 | −14 | 4 | 12 | 218 | 153 |
| 12 | 0 | 12 | 445 | 443 | −12 | 4 | 12 | 343 | 358 |
| 14 | 0 | 12 | 321 | 320 | −6 | 4 | 12 | 190 | 197 |
| 16 | 0 | 12 | 434 | 471 | −4 | 4 | 12 | 955 | 936 |
| 21 | 1 | 12 | 354 | 312 | −2 | 4 | 12 | 671 | 644 |
| 19 | 1 | 12 | 259 | 242 | 2 | 4 | 12 | 268 | 258 |
| 17 | 1 | 12 | 438 | 432 | 4 | 4 | 12 | 773 | 794 |
| 15 | 1 | 12 | 593 | 571 | 6 | 4 | 12 | 845 | 871 |
| 11 | 1 | 12 | 689 | 674 | 8 | 4 | 12 | 225 | 234 |
| −9 | 1 | 12 | 875 | 874 | 14 | 4 | 12 | 425 | 419 |
| −7 | 1 | 12 | 1142 | 1148 | −19 | 5 | 12 | 500 | 485 |
| −5 | 1 | 12 | 424 | 386 | −17 | 5 | 12 | 378 | 358 |
| −3 | 1 | 12 | 323 | 311 | −13 | 5 | 12 | 327 | 347 |
| −1 | 1 | 12 | 634 | 610 | −11 | 5 | 12 | 748 | 730 |
| 1 | 1 | 12 | 1012 | 1009 | −9 | 5 | 12 | 788 | 786 |
| 3 | 1 | 12 | 678 | 655 | −7 | 5 | 12 | 308 | 292 |
| 5 | 1 | 12 | 402 | 382 | −5 | 5 | 12 | 260 | 223 |
| 7 | 1 | 12 | 179 | 128 | −3 | 5 | 12 | 705 | 690 |
| 11 | 1 | 12 | 564 | 571 | −1 | 5 | 12 | 813 | 805 |
| 13 | 1 | 12 | 456 | 483 | 1 | 5 | 12 | 636 | 646 |
| 15 | 1 | 12 | 205 | 136 | 3 | 5 | 12 | 183 | 171 |
| −20 | 2 | 12 | 199 | 172 | 5 | 5 | 12 | 267 | 292 |
| −18 | 2 | 12 | 211 | 208 | 7 | 5 | 12 | 475 | 472 |
| −16 | 2 | 12 | 329 | 297 | 9 | 5 | 12 | 614 | 612 |
| −12 | 2 | 12 | 289 | 289 | 11 | 5 | 12 | 324 | 352 |
| −10 | 2 | 12 | 587 | 582 | −18 | 6 | 12 | 281 | 302 |
| −8 | 2 | 12 | 511 | 524 | −16 | 6 | 12 | 400 | 434 |
| −6 | 2 | 12 | 429 | 421 | −12 | 6 | 12 | 454 | 446 |
| −4 | 2 | 12 | 360 | 330 | −10 | 6 | 12 | 631 | 634 |
| −2 | 2 | 12 | 515 | 501 | −8 | 6 | 12 | 630 | 644 |
| 0 | 2 | 12 | 667 | 653 | −6 | 6 | 12 | 479 | 467 |
| 2 | 2 | 12 | 588 | 571 | −4 | 6 | 12 | 522 | 510 |
| 6 | 2 | 12 | 261 | 255 | −2 | 6 | 12 | 867 | 857 |
| 8 | 2 | 12 | ·314 | 326 | 0 | 6 | 12 | 786 | 787 |
| 2 | 6 | 12 | 735 | 738 | −8 | 2 | 13 | 1042 | 1036 |
| 6 | 6 | 12 | 540 | 533 | −6 | 2 | 13 | 858 | 834 |
| 8 | 6 | 12 | 504 | 517 | −2 | 2 | 13 | 207 | 210 |
| 10 | 6 | 12 | 775 | 786 | 0 | 2 | 13 | 646 | 629 |
| 12 | 6 | 12 | 519 | 541 | 2 | 2 | 13 | 1190 | 1188 |
| −17 | 7 | 12 | 354 | 341 | 4 | 2 | 13 | 769 | 771 |
| −15 | 7 | 12 | 481 | 486 | 6 | 2 | 13 | 177 | 155 |
| −11 | 7 | 12 | 417 | 391 | 10 | 2 | 13 | 896 | 892 |
| −9 | 7 | 12 | 504 | 489 | 12 | 2 | 13 | 706 | 729 |
| −7 | 7 | 12 | 723 | 721 | −19 | 3 | 13 | 179 | 158 |
| −5 | 7 | 12 | 354 | 356 | −11 | 3 | 13 | 206 | 168 |
| −3 | 7 | 12 | 257 | 247 | −9 | 3 | 13 | 368 | 364 |

## TABLE 1-continued

MO2CO2S4(CO)2(NCCH3)2[S2CH(C2H5)2]2

| H | K | L | FOBS | FCAL | H | K | L | FOBS | FCAL |
|---|---|---|---|---|---|---|---|---|---|
| 1 | 7 | 12 | 248 | 276 | −7 | 3 | 13 | 290 | 315 |
| 3 | 7 | 12 | 541 | 526 | −5 | 3 | 13 | 371 | 339 |
| 7 | 7 | 12 | 272 | 284 | −1 | 3 | 13 | 435 | 424 |
| 9 | 7 | 12 | 247 | 234 | 1 | 3 | 13 | 464 | 462 |
| −12 | 8 | 12 | 367 | 356 | 3 | 3 | 13 | 220 | 190 |
| −10 | 8 | 12 | 779 | 757 | 5 | 3 | 13 | 259 | 265 |
| −8 | 8 | 12 | 839 | 850 | 7 | 3 | 13 | 208 | 208 |
| −6 | 8 | 12 | 406 | 404 | 9 | 3 | 13 | 229 | 250 |
| −4 | 8 | 12 | 202 | 212 | −20 | 4 | 13 | 457 | 456 |
| −2 | 8 | 12 | 333 | 354 | −18 | 4 | 13 | 441 | 410 |
| 0 | 8 | 12 | 932 | 935 | −14 | 4 | 13 | 459 | 452 |
| 2 | 8 | 12 | 808 | 823 | −12 | 4 | 13 | 773 | 789 |
| 4 | 8 | 12 | 700 | 692 | −10 | 4 | 13 | 715 | 711 |
| 6 | 8 | 12 | 281 | 274 | −8 | 4 | 13 | 635 | 606 |
| 8 | 8 | 12 | 453 | 489 | −4 | 4 | 13 | 431 | 419 |
| −11 | 9 | 12 | 566 | 566 | −2 | 4 | 13 | 615 | 591 |
| −9 | 9 | 12 | 795 | 762 | 0 | 4 | 13 | 623 | 613 |
| −7 | 9 | 12 | 596 | 570 | 2 | 4 | 13 | 631 | 642 |
| −3 | 9 | 12 | 447 | 467 | 8 | 4 | 13 | 514 | 527 |
| −1 | 9 | 12 | 631 | 646 | 10 | 4 | 13 | 608 | 633 |
| 1 | 9 | 12 | 611 | 604 | 12 | 4 | 13 | 421 | 418 |
| 3 | 9 | 12 | 248 | 245 | −15 | 5 | 13 | 240 | 261 |
| 0 | 10 | 12 | 274 | 227 | −13 | 5 | 13 | 662 | 664 |
| −21 | 1 | 13 | 407 | 391 | −11 | 5 | 13 | 278 | 268 |
| −15 | 1 | 13 | 356 | 358 | −5 | 5 | 13 | 702 | 711 |
| −13 | 1 | 13 | 1050 | 1026 | −3 | 5 | 13 | 747 | 732 |
| −11 | 1 | 13 | 603 | 601 | −1 | 5 | 13 | 355 | 356 |
| −9 | 1 | 13 | 281 | 281 | 1 | 5 | 13 | 432 | 431 |
| −7 | 1 | 13 | 273 | 207 | 5 | 5 | 13 | 434 | 446 |
| −5 | 1 | 13 | 944 | 928 | 7 | 5 | 13 | 479 | 466 |
| −3 | 1 | 13 | 1088 | 1066 | 9 | 5 | 13 | 631 | 645 |
| −1 | 1 | 13 | 668 | 638 | 11 | 5 | 13 | 678 | 674 |
| 1 | 1 | 13 | 397 | 423 | −16 | 6 | 13 | 473 | 483 |
| 5 | 1 | 13 | 692 | 678 | −14 | 6 | 13 | 223 | 241 |
| 7 | 1 | 13 | 604 | 617 | −8 | 6 | 13 | 313 | 316 |
| 9 | 1 | 13 | 791 | 809 | −6 | 6 | 13 | 440 | 442 |
| 11 | 1 | 13 | 799 | 831 | −4 | 6 | 13 | 346 | 345 |
| 15 | 1 | 13 | 207 | 224 | −2 | 6 | 13 | 567 | 574 |
| −20 | 2 | 13 | 464 | 451 | 0 | 6 | 13 | 320 | 305 |
| −18 | 2 | 13 | 556 | 518 | 2 | 6 | 13 | 311 | 327 |
| −16 | 2 | 13 | 727 | 699 | 4 | 6 | 13 | 364 | 369 |
| −14 | 2 | 13 | 213 | 211 | 6 | 6 | 13 | 520 | 547 |
| −12 | 2 | 13 | 597 | 581 | 8 | 6 | 13 | 435 | 459 |
| −10 | 2 | 13 | 624 | 627 | −13 | 7 | 13 | 258 | 266 |
| −11 | 7 | 13 | 520 | 514 | 8 | 2 | 14 | 521 | 531 |
| −9 | 7 | 13 | 652 | 637 | 10 | 2 | 14 | 486 | 475 |
| −7 | 7 | 13 | 255 | 281 | 12 | 2 | 14 | 177 | 134 |
| −3 | 7 | 13 | 383 | 359 | −15 | 3 | 14 | 235 | 249 |
| −1 | 7 | 13 | 675 | 685 | −13 | 3 | 14 | 270 | 275 |
| 1 | 7 | 13 | 817 | 827 | −9 | 3 | 14 | 259 | 222 |

## TABLE 1-continued

MO2CO2S4(CO)2(NCCH3)2[S2CH(C2H5)2]2

| H | K | L | FOBS | FCAL | H | K | L | FOBS | FCAL |
|---|---|---|---|---|---|---|---|---|---|
| 3 | 7 | 13 | 530 | 525 | −7 | 3 | 14 | 397 | 374 |
| 7 | 7 | 13 | 447 | 451 | −3 | 3 | 14 | 165 | 102 |
| 9 | 7 | 13 | 823 | 822 | 1 | 3 | 14 | 767 | 771 |
| −12 | 8 | 13 | 298 | 279 | 3 | 3 | 14 | 284 | 326 |
| −10 | 8 | 13 | 258 | 245 | 7 | 3 | 14 | 212 | 223 |
| −8 | 8 | 13 | 395 | 418 | 9 | 3 | 14 | 562 | 584 |
| −6 | 8 | 13 | 280 | 273 | 11 | 3 | 14 | 425 | 439 |
| 2 | 8 | 13 | 354 | 354 | −18 | 4 | 14 | 264 | 278 |
| 4 | 8 | 13 | 172 | 169 | −16 | 4 | 14 | 409 | 389 |
| 6 | 8 | 13 | 262 | 235 | −14 | 4 | 14 | 546 | 547 |
| −7 | 9 | 13 | 188 | 152 | −10 | 4 | 14 | 480 | 483 |
| −5 | 9 | 13 | 183 | 157 | −8 | 4 | 14 | 186 | 222 |
| −3 | 9 | 13 | 219 | 173 | −6 | 4 | 14 | 415 | 406 |
| −1 | 9 | 13 | 587 | 569 | −4 | 4 | 14 | 354 | 330 |
| −20 | 0 | 14 | 282 | 272 | 2 | 4 | 14 | 190 | 195 |
| 18 | 0 | 14 | 473 | 470 | 4 | 4 | 14 | 198 | 197 |
| 16 | 0 | 14 | 764 | 749 | 8 | 4 | 14 | 174 | 209 |
| 4 | 0 | 14 | 1155 | 1124 | 10 | 4 | 14 | 428 | 453 |
| 2 | 0 | 14 | 357 | 325 | −17 | 5 | 14 | 427 | 426 |
| 0 | 0 | 14 | 264 | 316 | −15 | 5 | 14 | 461 | 453 |
| −8 | 0 | 14 | 384 | 415 | −13 | 5 | 14 | 384 | 398 |
| −6 | 0 | 14 | 884 | 871 | −11 | 5 | 14 | 322 | 348 |
| −4 | 0 | 14 | 1054 | 1032 | −7 | 5 | 14 | 413 | 423 |
| −2 | 0 | 14 | 265 | 282 | −5 | 5 | 14 | 522 | 536 |
| 0 | 0 | 14 | 541 | 525 | −3 | 5 | 14 | 541 | 553 |
| 2 | 0 | 14 | 266 | 269 | −1 | 5 | 14 | 406 | 410 |
| 4 | 0 | 14 | 604 | 618 | 3 | 5 | 14 | 310 | 336 |
| 6 | 0 | 14 | 577 | 576 | 5 | 5 | 14 | 329 | 360 |
| 8 | 0 | 14 | 843 | 882 | 7 | 5 | 14 | 496 | 529 |
| 10 | 0 | 14 | 852 | 869 | 9 | 5 | 14 | 225 | 270 |
| 12 | 0 | 14 | 229 | 225 | −14 | 6 | 14 | 449 | 455 |
| −15 | 1 | 14 | 189 | 143 | −12 | 6 | 14 | 250 | 268 |
| −7 | 1 | 14 | 446 | 441 | −6 | 6 | 14 | 311 | 302 |
| −3 | 1 | 14 | 188 | 213 | −4 | 6 | 14 | 446 | 426 |
| 1 | 1 | 14 | 566 | 550 | −2 | 6 | 14 | 417 | 440 |
| 3 | 1 | 14 | 327 | 327 | 0 | 6 | 14 | 682 | 673 |
| 9 | 1 | 14 | 414 | 432 | 2 | 6 | 14 | 388 | 379 |
| 11 | 1 | 14 | 196 | 193 | 6 | 6 | 14 | 499 | 532 |
| −16 | 2 | 14 | 336 | 320 | 8 | 6 | 14 | 745 | 778 |
| −14 | 2 | 14 | 325 | 299 | −13 | 7 | 14 | 195 | 179 |
| −12 | 2 | 14 | 231 | 232 | −11 | 7 | 14 | 415 | 417 |
| −4 | 2 | 14 | 343 | 341 | −7 | 7 | 14 | 431 | 417 |
| −2 | 2 | 14 | 391 | 375 | −5 | 7 | 14 | 428 | 411 |
| 0 | 2 | 14 | 500 | 497 | −3 | 7 | 14 | 627 | 600 |
| 2 | 2 | 14 | 251 | 267 | −1 | 7 | 14 | 394 | 391 |
| 6 | 2 | 14 | 436 | 420 | 1 | 7 | 14 | 256 | 250 |
| 3 | 7 | 14 | 360 | 332 | −7 | 7 | 15 | 202 | 227 |
| 5 | 7 | 14 | 376 | 364 | −5 | 7 | 15 | 323 | 322 |
| −4 | 8 | 14 | 237 | 264 | −3 | 7 | 15 | 553 | 538 |
| −2 | 8 | 14 | 566 | 565 | −1 | 7 | 15 | 449 | 428 |

## TABLE 1-continued

| H | K | L | FOBS | FCAL | H | K | L | FOBS | FCAL |
|---|---|---|---|---|---|---|---|---|---|
| MO2CO2S4(CO)2(NCCH3)2[S2CH(C2H5)2]2 | | | | | | | | | |
| 0 | 8 | 14 | 416 | 411 | −14 | 0 | 16 | 395 | 401 |
| −17 | 1 | 15 | 593 | 569 | −8 | 0 | 16 | 578 | 602 |
| −15 | 1 | 15 | 773 | 752 | −6 | 0 | 16 | 1010 | 1026 |
| −13 | 1 | 15 | 267 | 266 | −4 | 0 | 16 | 468 | 474 |
| −7 | 1 | 15 | 547 | 557 | 2 | 0 | 16 | 768 | 793 |
| −5 | 1 | 15 | 761 | 764 | 4 | 0 | 16 | 461 | 461 |
| −3 | 1 | 15 | 449 | 469 | −7 | 1 | 16 | 396 | 386 |
| −1 | 1 | 15 | 473 | 479 | −5 | 1 | 16 | 241 | 230 |
| 1 | 1 | 15 | 253 | 212 | 1 | 1 | 16 | 383 | 367 |
| 3 | 1 | 15 | 489 | 496 | 3 | 1 | 16 | 591 | 594 |
| 5 | 1 | 15 | 552 | 585 | −14 | 2 | 16 | 260 | 263 |
| 7 | 1 | 15 | 480 | 513 | −8 | 2 | 16 | 355 | 362 |
| 9 | 1 | 15 | 494 | 490 | −6 | 2 | 16 | 400 | 411 |
| −12 | 2 | 15 | 329 | 305 | −4 | 2 | 16 | 321 | 336 |
| −8 | 2 | 15 | 352 | 343 | −2 | 2 | 16 | 194 | 164 |
| 0 | 2 | 15 | 417 | 405 | 2 | 2 | 16 | 259 | 291 |
| 4 | 2 | 15 | 496 | 501 | 4 | 2 | 16 | 320 | 348 |
| 6 | 2 | 15 | 270 | 272 | −11 | 3 | 16 | 166 | 109 |
| 8 | 2 | 15 | 244 | 279 | −9 | 3 | 16 | 227 | 244 |
| −11 | 3 | 15 | 205 | 161 | −7 | 3 | 16 | 632 | 666 |
| 1 | 3 | 15 | 251 | 219 | −5 | 3 | 16 | 438 | 457 |
| 5 | 3 | 15 | 186 | 179 | −1 | 3 | 16 | 181 | 182 |
| 7 | 3 | 15 | 171 | 149 | 1 | 3 | 16 | 696 | 702 |
| −16 | 4 | 15 | 334 | 347 | 3 | 3 | 16 | 849 | 874 |
| −14 | 4 | 15 | 307 | 320 | 5 | 3 | 16 | 274 | 251 |
| −10 | 4 | 15 | 176 | 106 | −10 | 4 | 16 | 213 | 158 |
| −8 | 4 | 15 | 243 | 246 | −6 | 4 | 16 | 459 | 449 |
| −6 | 4 | 15 | 431 | 454 | −2 | 4 | 16 | 179 | 158 |
| −4 | 4 | 15 | 271 | 295 | 0 | 4 | 16 | 253 | 234 |
| 2 | 4 | 15 | 358 | 376 | 2 | 4 | 16 | 194 | 215 |
| 4 | 4 | 15 | 440 | 454 | −9 | 5 | 16 | 561 | 590 |
| 6 | 4 | 15 | 326 | 346 | −7 | 5 | 16 | 422 | 432 |
| 8 | 4 | 15 | 209 | 195 | −5 | 5 | 16 | 295 | 318 |
| −13 | 5 | 15 | 226 | 196 | −3 | 5 | 16 | 234 | 199 |
| −7 | 5 | 15 | 358 | 334 | −1 | 5 | 16 | 299 | 307 |
| −5 | 5 | 15 | 584 | 561 | 1 | 5 | 16 | 312 | 326 |
| −3 | 5 | 15 | 305 | 273 | −9 | 1 | 17 | 518 | 537 |
| −1 | 5 | 15 | 516 | 520 | −7 | 1 | 17 | 758 | 308 |
| 1 | 5 | 15 | 342 | 346 | −5 | 1 | 17 | 205 | 213 |
| 3 | 5 | 15 | 300 | 295 | 1 | 1 | 17 | 576 | 600 |
| 5 | 5 | 15 | 449 | 475 | −10 | 2 | 17 | 339 | 336 |
| −12 | 6 | 15 | 438 | 422 | −8 | 2 | 17 | 964 | 986 |
| −8 | 6 | 15 | 515 | 518 | −6 | 2 | 17 | 595 | 624 |
| −6 | 6 | 15 | 375 | 386 | −2 | 2 | 17 | 221 | 259 |
| −4 | 6 | 15 | 345 | 375 | 0 | 2 | 17 | 857 | 877 |
| −2 | 6 | 15 | 390 | 414 | 2 | 2 | 17 | 917 | 927 |
| 0 | 6 | 15 | 235 | 210 | −5 | 3 | 17 | 199 | 182 |
| 2 | 6 | 15 | 178 | 153 | −1 | 3 | 17 | 233 | 235 |

Significantly, the parent $Mo_2S_4(Et_2NCS_2)_2$ moiety appears as an essentially intact unit in the cluster, with the Mo-Mo bond length decreased very slightly (from 2.814 Å to 2.783 Å) and the Mo-S-Mo bridge angles and bond lengths little changed. However, the dihedral angle between the $MoS_1S_1'$ and $Mo'S_1S_1'$ planes has opened up from 147.9° to 164.4°, and the initially terminal Mo=S bonds have elongated from 2.09 Å to 2.316 Å as their role changes to a bridging $\mu_3$ mode, bound to two Co atoms as well as the original Mo. The binding of two acetonitrile molecules also raises the overall cluster electron count to 60 $e^-$, the predicted number for a stable $M_4$ cluster with six M-M bonds.

## EXAMPLE 6

### Production of $(Bu_2NCS_2)_2Mo_2(\mu^3\text{-}S)_4Cu_2Cl_2$

A sample of $(i\text{-}Bu_2NCS_2)_2Mo_2S_4$ (100 mg, .137 mmol) was dissolved in 15 ml warm $CH_3CN$, and solid CuCl (54 mg, 0.548 mmol) added. The mixture was stirred for 3 minutes, filtered, and the filtrate allowed to stand for 1 hour. The resulting fine red-brown crystalline solid was filtered and dried (yield: 113 mg). Anal. Calc. for $C_{18}H_{36}N_2S_8Mo_2Cu_2Cl_2$: C, 23.33; H, 3.92; N, 3.02; S, 27.67; Mo, 20.70; Cu, 13.71; Cl, 7.65. Found C, 24.38; H, 3.83; N, 3.11; S, 26.82; Mo, 20.51; Cu, 12.94; Cl, 7.55.

A single crystal x-ray diffraction study was carried out on the product. The structure is illustrated in Figure 2.

## EXAMPLE 7

### Hydrotreating Catalyst

An amount of the Example 5 material (0.80 gm) was decomposed on a model feed (5% dibenzothiophene/decalin) at 350°C and 3150 KPa $H_2$ in a modified batch autoclave and gave an extremely high desulfurization rate. A crude zero order rate constant derived from operating data obtained between 2 and 4 hours was determined to be 160 x $10^{16}$ molecules DBT/g. cat. precursor/sec. This material was therefore found to be an effective HDS catalyst.

It is to be understood that the above disclosure is by way of specific example and that numerous modifications and variations of the invention are available to those of ordinary skill in the art without departing from the true spirit and scope of the invention.

## Claims

1. A composition of matter containing a heterometallic thiocubane cluster having the Formula

$$(M^1_2 M^2_2 S_4)L^1_2 L^2_2 L^3_2$$

wherein:
$M^1$ is Re, V, Mo or W,
$M^2$ is Co, Cr, Cu, Ni or Fe,
$L^1$ is a bidentate sulfur and/or nitrogen bearing ligand, and
$L^2$ is optional but, if present, is a monodentate S, N, P or O donor ligand,
$L^3$ is selected from CO, a monodentate anion ligand such as a halide (preferably Cl), mercaptide or alkoxide, or another O-, N-, P-or S-containing monodentate donor ligand, and wherein $(M^1_2 M^2_2 S_4)$ forms said heterometallic thiocubane cluster.

2. The composition of claim 1 wherein $M^1$ is Mo or W.

3. The composition of claim 1 or claim 2 wherein $M^2$ is Co or Cu.

4. The composition of any one of claims 1 to 3 wherein $L^1$ is selected from the group of xanthate, dithiophosphinate, dithiophosphate, o-aminobenzenethiolate, and dithiocarbamate.

5. The composition of claim 4 wherein $L^1$ is $S_2CNR_2$ and wherein R is independently H or a hydrocarbyl group having from 1 to 12 carbon atoms.

6. The composition of claim 5 wherein each R is $C_2H_5$.

7. The composition of any one of claims 1 to 6 wherein $L^2$ is acetonitrile.

8 The composition of any one of claims 1 to 6 wherein $L^2$ is omitted and $L^3$ is selected from CO or Cl.

9. A method of making a composition of matter containing a heterometallic thiocubane cluster having the formula $(M^1_2 M^2_2 S_4)L^1_2 L^2_2 L^3_2$ wherein $(M^1_2 M^2_2 S_4)$ forms the heterometallic thiocubane cluster and wherein $M^1$ is Re, V, Mo or W, $M^2$ is Co, Cr, Cu, Ni or Fe, $L^1$ is a bidentate sulfur- and/or nitrogen-bearing ligand, $L^2$ is optional but if present is a monodentate S, N, P or O donor ligand, $L^3$ is selected from CO, a monodentate anion ligand such as a halide (preferably Cl), mercaptide or

alkoxide, or another O-, N-, P- or S-containing monodentate donor ligand, the method comprising adding a substantially stoichiometric amount of a low valent complex based on Co, Cr, Cu, Ni or Fe to a solution or slurry of $M^1_2$ $S_4L^1_2$ and adding $L^3$, and optionally $L^2$.

10. A method as in claim 9 in which $M^1_2$ is W and $L^1$ is $[S_2CNR_2]$ wherein R is an H or a $C_1$ to $C_{12}$ hydrocarbyl group.

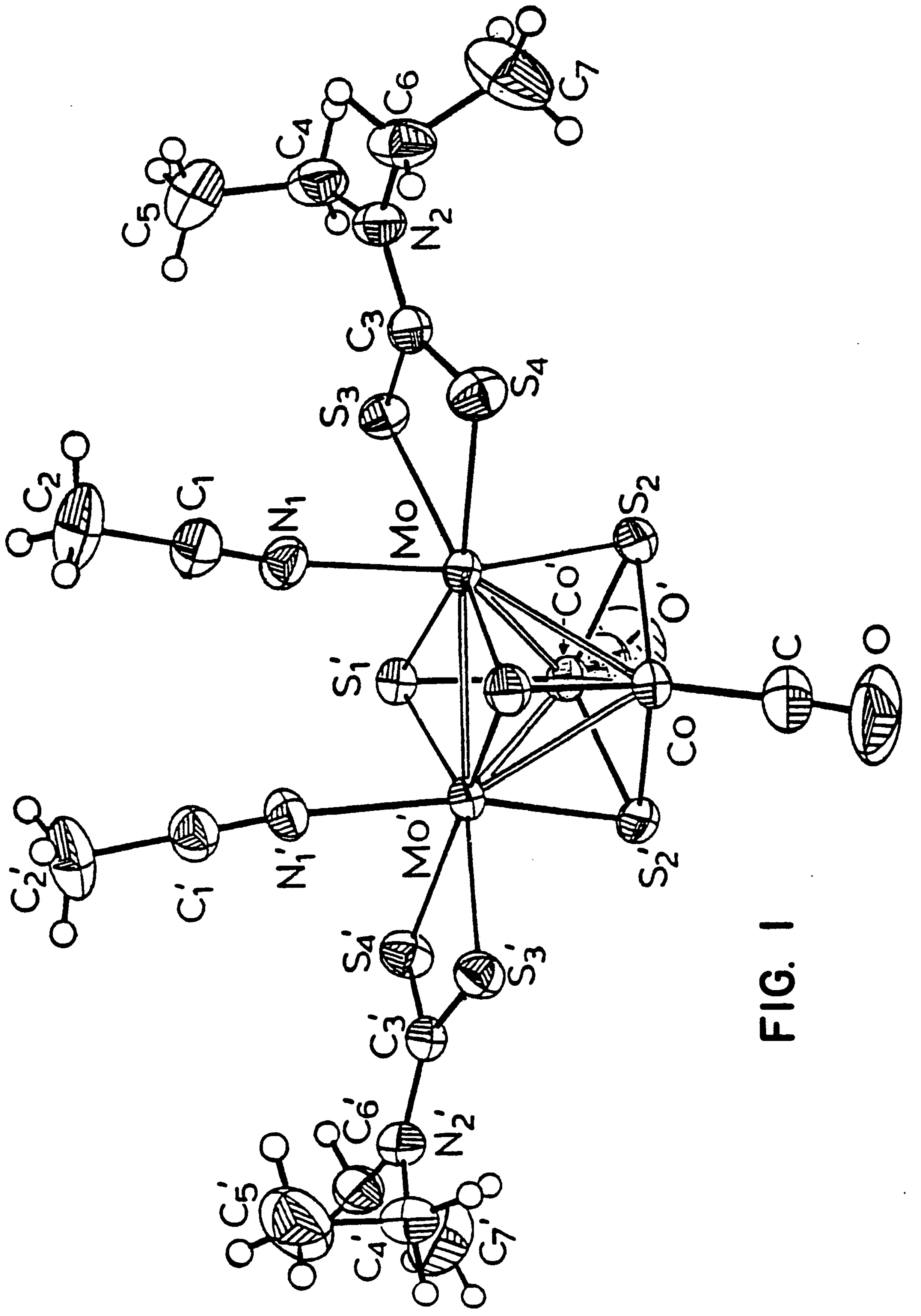

FIG. I

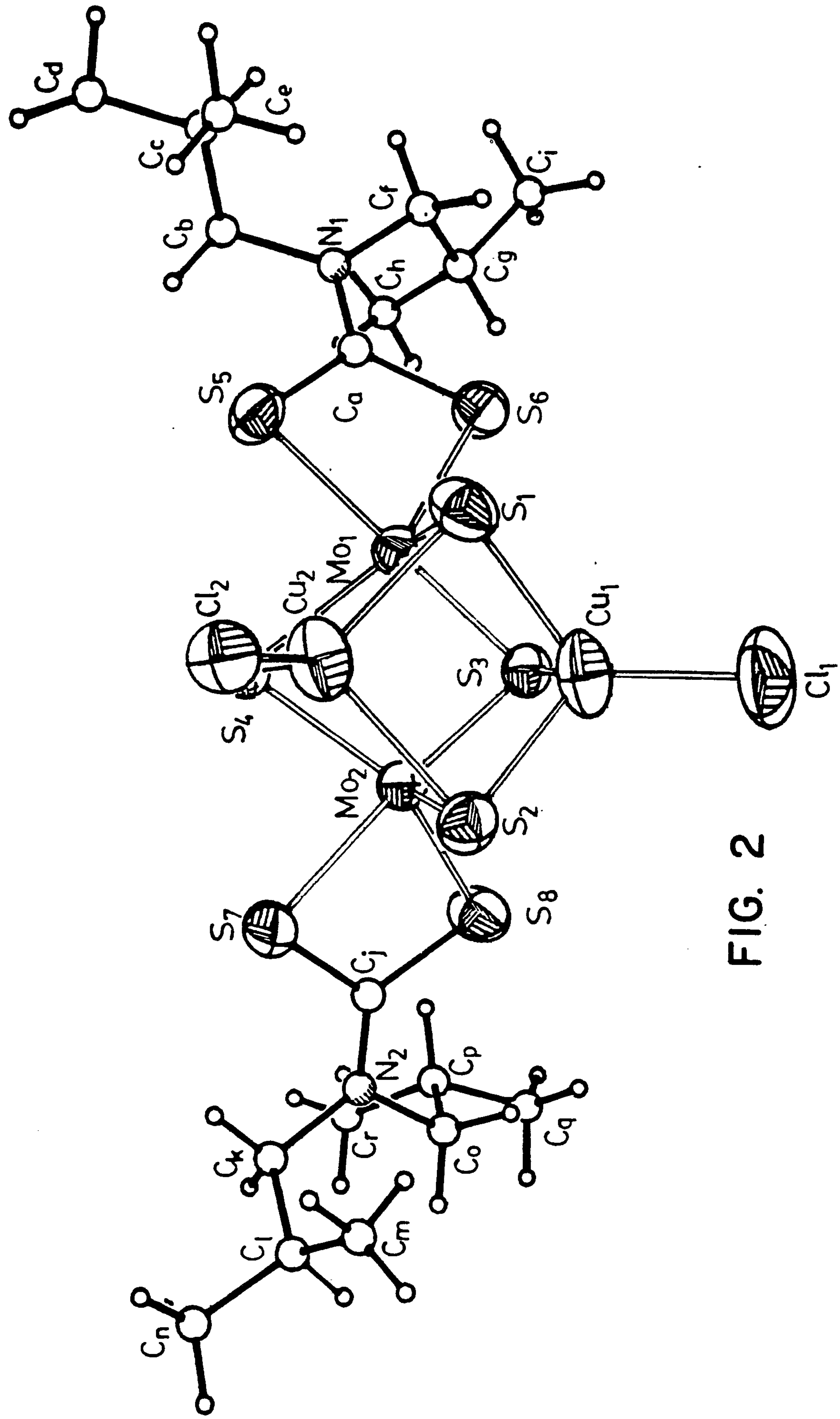

FIG. 2

European Patent Office

# EUROPEAN SEARCH REPORT

Application Number

EP 87 31 0895

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 103, no. 12, 23rd September 1985, page 673, no. 97859t, Columbus, Ohio, US; T.R. HALBERT et al.: "Construction of heterometallic "thiocubanes" from M2S2(mu-S)2 core complexes: synthesis of Co2M2S4(S2CNEt2)2(CH3CN)2(CO)2 (M = Mo, W) and structure of the Co2Mo2(mu3-S)4 cluster" * Abstract * | 1-10 | C 07 F 11/00<br>C 07 F 15/06 |
| A | INORG. CHEM., vol. 21, no. 4, 1982, pages 1699-1701, American Chemical Society; W.H. ARMSTRONG et al.: "Demonstration of the existence of single cubane-type MoFe3S4 clusters with S = 3/2 ground states: preparation, structure, and properties" * Page 1700, formula 2 * | 1-10 | |
| | | | TECHNICAL FIELDS SEARCHED (Int. Cl.4) |
| | | | C 07 F 11/00<br>C 07 F 15/00 |

The present search report has been drawn up for all claims

| Place of search | Date of completion of the search | Examiner |
|---|---|---|
| THE HAGUE | 10-08-1988 | PAUWELS G.R.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document